# EUROPEAN PATENT SPECIFICATION

(11) **EP 1 267 524 B1**
(45) Date of publication and mention of the grant of the patent: **02.04.2008**
(21) Application number: 02254084.3
(22) Date of filing: 12.06.2002
(51) Int. Cl.: H04L 12/28, H04L 29/06

(54) **Broadband virtual private network VPN with enterprise wireless communication system and method for virtual home or business environment VHE**
Breitbandiges virtuelles privates Netz VPN mit einem drahtlosen Firmenkommunikationssystem und Verfahren für eine virtuelle Heim- und Geschäftsumgebung VHE.
Réseau privé virtuel à bande large VPN avec un système d'entreprise de communication sans fil et procédé pour un environement virtuel résidentiel ou d'entreprise VHE.

(30) Priority: 14.06.2001 US 880827; 14.06.2001 US 881111
(43) Date of publication of application: 18.12.2002
(73) Proprietor: AT&T Corp., Middletown, New Jersey 07748-4110 (US)
(72) Inventor: Chow, Albert T., Hillsdale, New Jersey 07642 (US); Miller, Robert R., Convent Station, New Jersey 07960 (US); Russell, Jesse E., Piscataway, New Jersey 08854 (US); Ying, Wenchu, Cedar Knolls, New Jersey 07927 (US); Kim, Jinman, Chatham, New Jersey 07928 (US); Erving, Richard H., Piscataway, New Jersey 08854 (US)
(74) Representative: Suckling, Andrew Michael

(56) References cited:
- EP-A- 0 708 572
- EP-A- 0 766 490
- US-A- 6 029 067
- US-A- 6 041 048
- SALMAN M A ET AL: "THE FUTURE OF IP-PSTN INTERWORKING" 38TH EUROPEAN TELECOMUNICATIONS CONGRESS. PROCEEDINGS NETWORKING THE FUTURE. UTRECHT, NL, AUG. 24 - 28, 1999, LONDON: IBTE, GB, 24 August 1999 (1999-08-24), pages 163-167, XP000847190

## Description

### Field of the Invention

The present invention relates to communications between users in diverse communication systems and, more particularly, to providing a wireless local access system/service in the home, Small Office Home Office (SOHO), business and public environments by utilizing a service provider's broadband transport network to a service provider's broadband packet network, an Internet Protocol Telephony Network, and public switched telephone network. Specifically, this invention relates to broadband network access for users in the above-mentioned environments. The invention extends the scheme of wired Virtual Private Networks (VPNs) to include duplicate wireless elements in home and office. These elements allow users to experience identical service behaviors in both locations, effectively creating a "work" wireless feature environment at home, as well as a "home" wireless feature environment at work.

### Background of the Invention

Present day telephony voice networks are built around circuit switches, end offices, a toll network, tandem switches, and twisted pair wires. These voice networks are referred to as a Public Switched Telephone Network (PSTN) or Plain Old Telephone Service (POTS). Due to bandwidth limitations of Plain Old Telephone Service (POTS), there is an inherent inability to efficiently integrate multiple types of media such as telephony, data communications (including video) for Personal Computers (PC), and television (TV) broadcasts. Accordingly, a new broadband architecture is required. This new architecture gives rise to a new array of user services.

There are limitations on communication services provided to the public for accessing communication networks. The most common access points to communication networks are POTS connections in the residences, SOHO, business and public environments. However, these access points are limited to voice telephone calls and offer practically no additional calling services. Connections for users to access communication networks for transmitting and receiving data is mostly limited to low-speed dial-up (e.g., 28 kbps or slower), kiosks located in public areas for Web browsing, or dedicated trunks (e.g., T1) in business locations. As the demand for increased sophistication of telecommunication services increases, providing users with residential and SOHO/business high-speed communication networks will be required.

The evolution of business enterprises toward a more decentralized business environment coupled with new work styles and flexible organization structures has changed where, when and how users and professionals conduct and achieve their daily residential and business objectives. In particular, the following shifts in user and business needs can be observed:
a. The challenges of supporting an increasingly mobile workforce requires corporations and businesses to focus on providing mobility and service profile portability to them.
b. The emergence of wireless as a "primary" phone, prompting demand for one phone, one number, anytime, anywhere communications.
c. Increasing numbers of computing resources in the home necessitate the ability to link these elements together in order for consumers to leverage their usage and capabilities.
d. Increasing number of households that access the Internet.

Therefore a need exists for users to be able to utilise a residential or SOHO/business service architecture together with a flexible wireless networking platform that links all the preselected residential or SOHO/business devices wirelessly.

US-A-6 041 048 addresses the problem of scheduling two or more communication services over a single communication link, such as a link between centralised equipment and a remote site, that has a restricted bandwidth thus leading to delays in communication at times of high demand. The method of US-A-6 041 048 is based on monitoring "critical attributes" of the two communication services. Decisions regarding which service to transmit are made based on, for example, the type of information being transmitted so that voice communication packets may take precedence over data communication packets.

EP-A-0 708 572 discloses a method of virtual circuit management in a cellular telecommunications network. A virtual circuit is established by receiving, at a radio port, a virtual circuit identifier from a wireless terminal and attaching the virtual circuit identifier to an Operation, Administration & Maintenance cell. The radio port then transmits, over a pre-established unidirectional virtual circuit, the OA&M cell to a radio port manager.

A first aspect of the present invention provides a method for providing network-centric service distribution to a plurality of local wireless devices at an enterprise location according to claim 1. A second aspect of the present invention provides a network-centric service distribution architecture that facilitates end-to-end packet telecommunication services according to claim 19.
The scope of the invention is defined by the appended claims.
The other embodiments are not part of the invention and are only described by way of example.

### Brief Description of the Drawings

The foregoing summary of the invention, as well as the following detailed description of preferred embodiments, is better understood when read in conjunction with the accompanying drawings, which are included by way of example, and not by way of limitation with regard to the claimed invention.

Figure 1 is a schematic representation of an architecture for one embodiment of broadband networking for home, Small Office Home Office (SOHO) and business in accordance with the present invention.

Figure 2 is a combined schematic representation and flow chart for one embodiment of a home control scheme based on TIA/EIA-136 Short Message feature in accordance with the present invention.

Figure 3 is a combined schematic representation and flow chart for one embodiment of a voice call scheme in accordance with the present invention.

Figure 4 is a combined schematic representation and flow chart for one embodiment of an interworking call scheme in accordance with the present invention.

Figure 5 is a schematic representation of one embodiment of a data services implementation in a home network in accordance with the present invention.

Figure 6 is a schematic representation of one embodiment of a scheme for roaming to a visiting service area in accordance with the present invention.

Figure 7 is a block diagram of one embodiment of a wireless access point system for supporting a plurality of RF methods in accordance with the present invention.

Figure 8 is a functional block diagram showing one embodiment of functions for a Media Terminal Adapter (MTA) in accordance with the present invention.

Figure 9 is a functional block diagram showing one embodiment of an Intelligent Broadband Access Point unit (IBAP) in accordance with the present invention.

### Detailed Description of the Preferred Embodiments

The present invention implements a network-centric service distribution architecture that integrates a wireless access system/service in the residence, SOHO, business or public environment through the use of a RBN to the service provider's broadband transport network and to a service provider's broadband packet network that facilitates end-to-end packet telecommunication services. This invention also provides for access and control of home and/or office computing resources, devices, and appliances (locally or remotely) via a service provider's broadband transport network access to the home or office and related apparatus and methodology for home and office networking. Currently, when people travel they must relinquish the access of their home and office computing resources in addition to their home appliances and devices due to lack of capability to access these resources and devices. Making these resources available to a traveler remotely through wired or wireless means provides convenience to the user. The service architecture, the methodologies and apparatuses enable a traveler to "carry or reach" their office or residential environments even when they are located at a remote location. For example, a user may turn on or off the air conditioner, check home or office security, prepare dinner by turning on the oven, access e-mail, send and receive data messages, utilize home computing resources, etc. For ease of reading, many references below are addressed simply to the home environment and home resources. However, as used herein, such references also are intended to include the office environment and office resources applicable in the enterprise environment. Therefore, the present invention provides for broadband network access for the home, Small Office Home Office (SOHO) environment and for the enterprise environment.

In residential use, the present invention provides a home with broadband network access together with a flexible wireless networking platform that provides service via links to all the applicable home devices and appliances wirelessly. The service provides broadband access to the home, a home networking apparatus, methodology and architecture that links all the home computing and telephony resources, appliances, electronics, and preselected devices to a service provider's broadband packet network, provides for distribution of services from a carrier service provider to the home and to the home networking devices, thus making available a multiplicity of new home services.

Three key wireless access technologies/standards, TIA/EIA-136, General Packet Radio Service (GPRS)/Enhanced Data for Global Evolution (EDGE), and IEEE 802.11b Wireless LAN, are used to define basic residential and/or small business services, and the interworking methodologies that allow a traveler to "carry" his home and/or small business resources anywhere. However, these standards are for illustrative purposes only and any practices that are based on differences or variations of given home or small business network apparatuses and/or broadband network access to the home and/or small business environments and/or wireless protocols shall be within the scope of the invention. For example, the IEEE 802.15 Wireless Personal LAN (i.e., Bluetooth) or the Cellular Digital Packet Data (CDPD) standard may be used instead of IEEE 802.11b, and any second-generation or third-generation standard wireless protocol (e.g., Global System for Mobile communications (GSM), Call Division Multiple Access (CDMA) (i.e., IS-95 High Data Rate (HDR)), CDMA2000, Wideband CDMA (WCDMA), or Personal Handyphone System (PHS)) can be used instead of TIA/EIA-136).

The wireless industry (i.e., Personal Communications Service (PCS) and cellular service) has revolutionized how people communicate, especially when they are on the move. However, the habit of using a wired telephone at home and in the office remains the same simply because wireless communication costs more than wired, provides poorer voice quality than wired telephony, and does not have adequate local RF coverage due to blind spots and often limited radio capacity in densely populated areas. The emerging broadband access (e.g., HFC cable, fixed wireless, xDSL such as Asymmetric DSL (ADSL), High-bitrate DSL (HDSL), Integrated Digital Service Network (ISDN) DSL (IDSL), Symmetric DSL (SDSL) and Very -high-data-rate DSL (VDSL), the Local Multipoint Distribution System (LMDS), and the Microwave Multipoint Distribution System (MIVIDS)), to the home creates opportunities for new services including the integration of wireless communication for home and office (i.e., SOHO) environments. A base station or stations located in the home for local wireless access service may provide effective RF coverage anywhere within a home with quality of service. In addition, a base station may provide the linkage between the service provider's broadband network and the subscriber's home networking devices to allow a service provider to distribute value-added services to the home conveniently.

The methodology of the present invention integrates second- and third-generation wireless services in the home with broadband access to a service provider's network. Enterprise Wireless Communications Service Platform (EWCSP) is the wireless access networking system/platform. EWCSP uses a conventional (e.g., second-generation) wireless standard communication system to provide wireless services in-doors. It consists of miniaturized radio base stations (i.e., access ports) located in the residence, SOHO, business, or public environments that communicate with a plurality of wireless devices. EWCSP provides accesses and services from the service provider's broadband packet network via a service provider's broadband transport network. A system controller, the NSP, residing in the service provider's broadband packet network, controls and administers the access ports and associated service requests. A service provider can distribute services via the broadband home access devices through the EWCSP to the subscriber at home. Some examples of such services are voice, data, short message service, home networking related device control and linkage to the home PC for remote access at a desired time wirelessly.

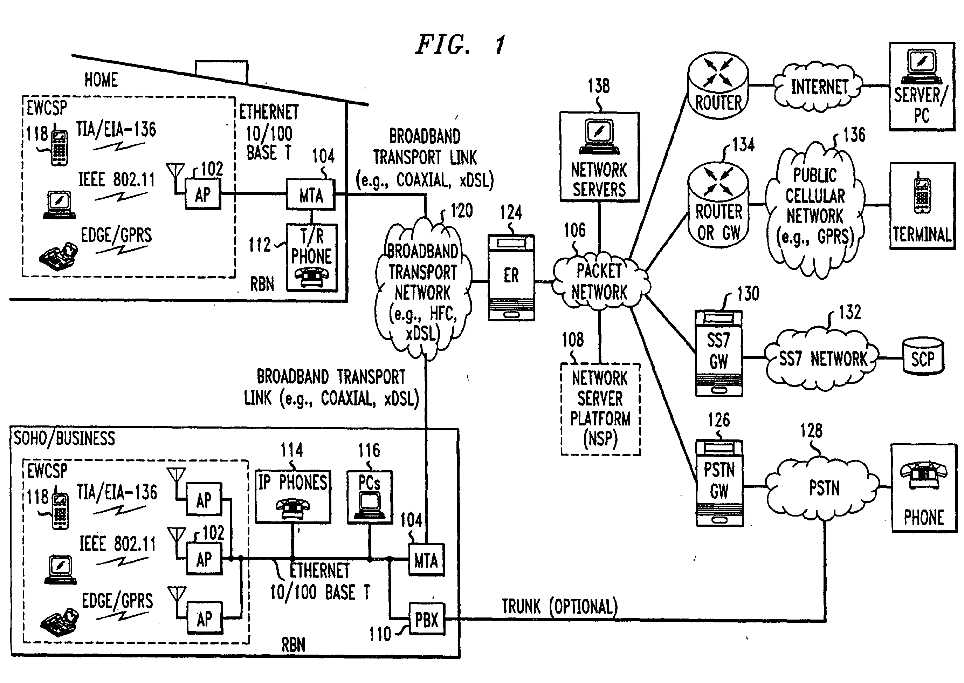

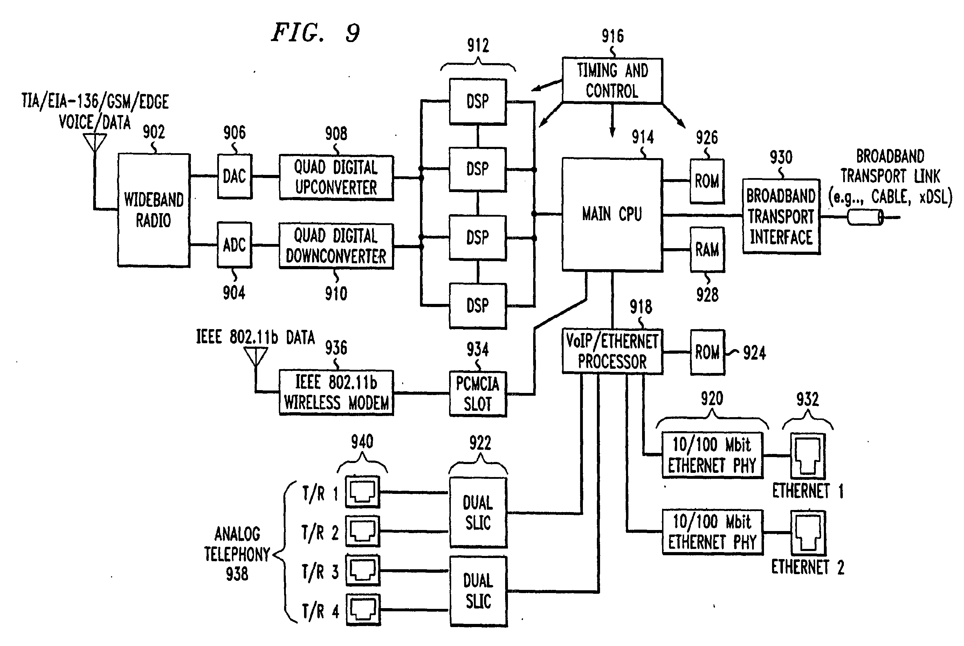

Figure 1 is a schematic representation of an architecture for one embodiment of broadband networking for home, Small Office Home Office (SOHO) and business in accordance with the present invention. The present invention includes both service and equipment elements. The equipment portion of the invention typically consists of a special miniaturized radio base station (i.e., access port) that may establish analog and/or digital communication channels and interworks between the wireless and packet telephony protocols (including voice transcoding). The function can be provided efficaciously by the EWCSP Access Port (AP) 102. The AP unit 102 is based on Digital Radio Processing (DRP) techniques that accomplish transmission and reception of wireless radio signals by numerical rather than conventional analog processing means. The AP unit 102 supports a standard air interface (e.g., TIA/EIA-136) and packet telephony protocols (and associated voice coding schemes) and is connected via a wired line interface (e.g., Ethernet or ISDN/Basic rate Interface (BRI) line interface as shown in Figure 1) to the Media Terminal Adapter (MTA) 104. The MTA 104 is connected via a broadband transport link (for example, via the HFC network, xDSL, or the like) to the service provider's broadband packet network 106. The MTA 104 provides access functions that connect between a service provider's broadband packet network 106 and the home devices via the service provider's broadband transport network 120. The MTA 104 and the AP unit 102 may be two physically distinct and interconnected units or they can be confined within one physical unit (see Figure 9). For purposes of the description for Figure 1, the MTA 104 and the AP unit 102 are considered as two separate units. The RBN in the home network in the residential environment or business network in the SOHO/business environment is the local broadband network that consists of the MTA interconnected to the AP, the associated wireless devices including any home devices and resources, computing devices and resources and appliances communicating wirelessly with the AP, and associated wired devices including computing devices and resources and telecommunication devices and resources communicating with the MTA and AP. The MTA can be entirely within the RBN, entirely within the service provider's broadband transport network or split between the RBN and the service provider's broadband transport network.

The system controller, the Network Server Platform (NSP) 108, for the APs is located in the service provider's broadband packet network. The home network, the service provider's broadband transport network, and the service provider's broadband packet network are all based on packed/cell format (e.g., Internet Protocol (IP)/Asynchronous Transfer Mode (ATM). When the connection between the AP 102 and the MTA 104 is an ISDNBRI link, the MTA 104 acts as a concentrator or channel bank (i.e., multiplexer/de-multiplexer) for all the line interfaces from the AP(s) 102. Q.931 signaling is used only to establish the B-channels between the AP 102 and the MTA 104; packetized voice or data are then sent over the B-channels through the service provider's broadband packet network to their end destinations. Thus, the present invention provides home, SOHO and business (broadband) wireless services and home or business networking, typically using EWCSP via broadband access to a service provider's broadband packet network.

Service provided by the present invention includes:
a. When a home's or business's resources are connected to a home or business networking platform that has broadband access to the service provider's broadband packet network, users with predetermined security privileges can remotely access any or all resources/appliances in or around the home or office via the service provider's broadband packet network. Thus, the home or business networking platform with the broadband network connectivity establishes a communications conduit for a subscriber at one end of the conduit to remotely access, control, monitor, and share the home's or business's resources at the other end of the conduit. This conduit also enables the delivery of traditional communication/entertainment services and new services. Depending on the RF coverage of the AP 102, the power of the AP 102 may be adjusted for coverage up to, for example, a mile or more in radius and therefore the services architecture may include the campus, public, or enterprise environments.
b. A home or business with broadband network connectivity and a home or business networking platform enables the service provider to distribute value-added network services (e.g., voice telephony) at any desired place within the home or business.
c. A home or business with broadband network connectivity and a home or business networking platform enables a content service provider to render services transparently/directly to home or business via the service provider's broadband packet network.
d. A home or business with broadband network connectivity and a home or business networking platform enables a subscriber to deliver and receive calls via a service provider's broadband packet network to and from the traditional PSTN and associated wireless PCS/Cellular networks. The services typically include all traditional service features and applications (i.e., voice, data etc.)
e. A home or business with broadband network connectivity and a home or business networking platform enables a subscriber to send, receive and browse information via a service provider's broadband packet network to and from the traditional data/voice packet network (i.e., Internet). The services typically include traditional Internet service features and applications.

Figure 1 is a schematic representation of a high-level home or business networking service architecture based on the EWCSP for the home, SOHO and business environments. In the SOHO or business environment, a PBX 110 (as shown in Figure 1) delivers feature applications or, alternatively, the service provider's broadband packet network can deliver such features, as in the circuit-switched Centrex model (not shown).

As used herein, the following terms have the definitions recited below:
a. Tip/Ring (T/R) Phone 112- Normal telephony Customer Provided Equipment (CPE) with RJ-11 interface to the MTA. For example, the phone may be a touch-tone telephone, fax machine, or analog modem.
b. IP Phone 114- IP telephone with digital processing capability to support multiple codecs and communications protocols, echo cancellation with an Ethernet interface.
c. Personal Computer (PC) 116 - Customer's PC with a home or business networking interface (e.g., IEEE 802.11b and/or Ethernet).
d. Wireless Phone 118 - Standard second-generation or third-generation wireless telephone with home or business networking interfaces (e.g., TIA1EIA-136, or EDGE/GPRS).
e. Access Port (AP) 102- EWCSP Access Port connected to MTA. The AP and MTA may be physically one unit or two physically distinct and interconnected units.
f. Media Terminal Adapter (MTA) 104 - Media terminal equipment integrated with a modem for access to the service provider's broadband transport network and to the service provider's broadband packet network. The modem interfaces with the transport infrastructure: for example, if the HFC plant is used, then the modem is a cable modem; alternatively, if ADSL is used, then the modem is an ADSL modem. MTA digitally encodes multimedia signals, encapsulates the encoded signal in IP packets, and delivers the packets to the network via the modem. The multimedia signals may be either analog or digital. The MTA maintains a call state for each active telephone line and participates in call signaling and telephony feature implementation. The AP and MTA may be physically one unit or two physically distinct and interconnected units. The modem receives IP packets from either the Media Terminal Adapter or PC and packages and sends them through the service provider's broadband transport network using the appropriate interface. For example, for the HFC transport network, the interface is defined in DOCSIS 1.1.
g. Service Provider's Broadband Transport Network 120 - standard transport infrastructure that comprises on or more of HFC, xDSL, fixed wireless, fiber optic, etc. For example, the HFC Network is a standard two-way cable plant with at least one 6 MHz downstream channel and several 2 MHz upstream channels designated for cable modem IP services. This HFC network includes the Cable Modem Termination System (CMTS) that terminates the 2 MHz upstream channels and originates the 6 MHz downstream channel used for CM IP services. CMTS implements the Medium Access Control (MAC) over the HFC network as defined in DOCSIS 1.1.
h. Edge Router (ER) 124- Enforces the Quality of Service (QoS) policies and is the access router for the packet network
i. Service Provider's Broadband Packet Network 106 - Packet access and backbone network supporting packet transport, VPN, and QoS needed for isochronous media service.
j. Network Server Platform (NSP) 108- Administers the wireless terminals, including call processing, Operations, Administration and Maintenance (OA&M), terminal mobility, personal mobility, location mobility, and RF management. It interworks with the other servers and/or gateways (GWs) to establish a call end-to-end. The NSP platform 108 also functions as a transaction server that participates in call processing and controls access to network resources (including QoS in the packet network). It translates E.164 addresses to destination packet addresses either internally or by accessing the Directory Server. The NSP platform 108 may physically consist of several servers.
k. PSTN Gateway 126- Translates packet streams to standard Time Division Multiplexed (TDM) trunks in the PSTN. It interfaces to necessary PSTN services with trunk-based multi-frequency (MF) interfaces (e.g., 911 offices, operator services platforms).
l. Public Switched Telephone Network (PSTN) 128- Gateways will need to interface with several existing circuit switched networks.
m. Signaling System 7 (SS7) Gateway 130 - Translates signaling from the Gate Controllers to standard SS7 signaling. Accesses 800 Portability and Local Number Portability (LNP) databases in the SS7 network.
n. SS7 Network 132 - SS7 Gateways will need to access several different existing SS7 networks.
o. Router 134 - Packet routers with QoS functionality.
p. Cellular Network 136 - Network of base stations, systems and associated elements needed to communicate with wireless devices for cellular or PCS service.
q. PBX 110 - PBX with packet-switched (e.g., Ethernet) and circuit-switched (e.g., T1, ISDN/Primary Rate Interface (PRI), etc) interfaces providing traditional PBX features and supporting multiple communication protocols (e.g., Session Initiation Protocol (SIP), Media Gateway Control Protocol (MGCP), ISDN, analog, etc) and voice encoding schemes (circuit-switched and packetization). The PBX supports call delivery to the packet and/or PSTN networks.
r. Network Servers 138 - Home networking, IP telephony and OA&M servers such as:
s. PSTN Media Gateway Controller (MGC) - The overall PSTN interworking function is controlled by a Media Gateway Controller, which, together with the PSTN Gateway and the SS7 Gateway, is interpreted as an SS7-capable circuit switch to the PSTN.
t. Network Resources - Several network resources are needed to support data/telephony service. For example, Announcement Servers may be used to deliver audio announcements to customers, and network bridges may be used for multi-point conferences.
u. Directory Server - Contains E.164 number-to-IP address translation information. An E.164 number may be translated to either the IP address of a home device, the PSTN Gateway, or the IP address of a NSP. Responds to translation requests from the NSP.
v. Authentication Server - Contains authentication information that is used to validate a MTA's identity claim. Responds to authentication requests from the NSP.
w. Dynamic Host Configuration Protocol (DHCP) Server - Assigns IP addresses to MTAs and PCs for the high-speed data service.
x. Domain Name Server (DNS) - Standard DNS for high-speed data service.
y. Short Message Server - A Short Message server for low-speed home control services. The server may also interwork with public macrocellular Short Message Service center for delivery of Short Message Service message to wireless devices within the home or business network. This short message server and associated wireless devices may use any standard second-generation or third-generation wireless protocols, e.g., TIA/EIA-136, Cellular Digital Packet Data (CDPD).
z. DN - Directory Number.
   aa. RTP - Real-Time Protocol - An application sublayer protocol (part of ISO Layer 7) which provides the common real-time services required by any application sending and receiving delay-sensitive traffic, such as voice and video. Includes mechanisms such as time stamps and sequence numbers which provide the receiver with the timing information necessary for a proper layout. Also includes mechanisms to support multiplexing of multiple real-time flows between the same layer 4 ports in communicating endpoints.
   bb. RTCP - Real-Time Control Protocol - An application sublayer protocol that provides out-of-band control information for an associated RTP flow. Enables performance reports on parameters such as lost packets and jitter for the RTP flow to be sent from the receiver to the transmitter.

The following describes a series of embodiments of wireless access schemes for a subset of the wireless interface standards that may be adapted by the AP 102 and the available services in accordance with the present invention.

### TIA/EIA-136

When the AP 102 supports the TIA/EIA-136 TDMA air interface, it radiates a digital "setup" channel signal in the frequency range that is allocated for the EWCSP system that is serving the area. The transmitted power of the signal is reduced to a level that allows it to "reach" only within the subscribed home, SOHO, office, public, or campus parameters, thus rendering its signal "invisible" to handsets outside of these targeted boundaries (e.g., public macrocellular network). The subscriber may use the same wireless telephone 118 at home, on the road, and in the office. In the home environment, the wireless telephone 118 behaves as a cordless extension of the home telephone; and likewise, in the office environment, the same telephone behaves as a cordless extension of the office telephone (e.g., in-building wireless office service). In both cases, no airtime charges are accrued, and the user is billed according to the normal wired local telephony subscription plan. When the subscriber is on the road, the wireless phone is reached by its Mobile Identification Number (MIN), it communicates with the macrocellular network for mobile calls, and the calls are billed according to the user's cellular calling plan. This architecture may also support the termination of MIN-based calls to the wireless telephone in the home or office environment by interworkings between EWCSP and the macrocellular public network.

In the home environment, the wireless Short Message feature (e.g., as defined in TIA/EIA-136), may be used for supporting one-way/two-way low-speed home control features such as home appliances, electronics, devices, etc., in accordance with the present invention. The following are several embodiments using the Short Message feature in accordance with the present invention. (Note that the CDPD standard could also be used to send these short messages.):

1. A subscriber is on the way home and logs onto the service provider's web site. After an authentication and authorization process, he sends a short message to the thermostat in his house, via connectivity to his home networking platform, to turn the air conditioner to a cooler setting. When he arrives home, the house is at a comfortable temperature.

2. A subscriber's refrigerator is not functioning properly and the refrigerator has been programmed to send alert messages to the subscriber via short message feature; in turn, the subscriber sends a short message to the refrigerator (via the home networking platform) to run a diagnostic check. After the test, the refrigerator sends the results back in another short message so that the subscriber may determine appropriate action.

3. A subscriber authorizes the manufacturer of a newly purchased refrigerator to access his refrigerator through the service provider's broadband packet network to his home networking platform to run regular maintenance checks, etc.

Through a service provider's broadband packet network connection, there are many other potential services (e.g., programming VCRs, car maintenance, utility reading, electrical consumption monitoring of appliances, etc.) that may be implemented, depending on the appliance/device.

### Home Control of an TIA/EIA-136-enabled Appliance via the TIA/EIA-136 Short Message Feature:

The call flows described below are for illustrative purposes only, and are not meant to follow the exact message format of a specific call-signaling standard. The communication exchange between the NSP and the Network Servers, and between the NSP and the AP, and the AP and the VCR are illustrated accordingly to the ANSI-41 and TIAIEIA-136 standard respectively. However the exchange between the Web-enabled wireless terminal (e.g., wireless Personal Digital Assistant (PDA)) and the Network Servers are in English descriptive language and do not adhere to any specific protocol. ANSI-41 is a known standard in the industry and is used during the exchange of SMS messages between the SMS Center in the network and TIA/EIA-136 terminal. By supporting the ANSI-41 standard, the NSP can also interwork with the public macrocellular system for delivery of MIN-based calls and SMS messages to the Mobile Station (MS) in the home network. Note that any second-generation or third-generation wireless standard that supports the SMS feature can also be used, e.g., GSM. The access port can also communicate with wireless enabled devices using a short message process adapted to support home control service aspects. That is, the short message process may not actually use or be a standard short message service as opposed to a process that resembles a short message service and is herein denominated a short message process.

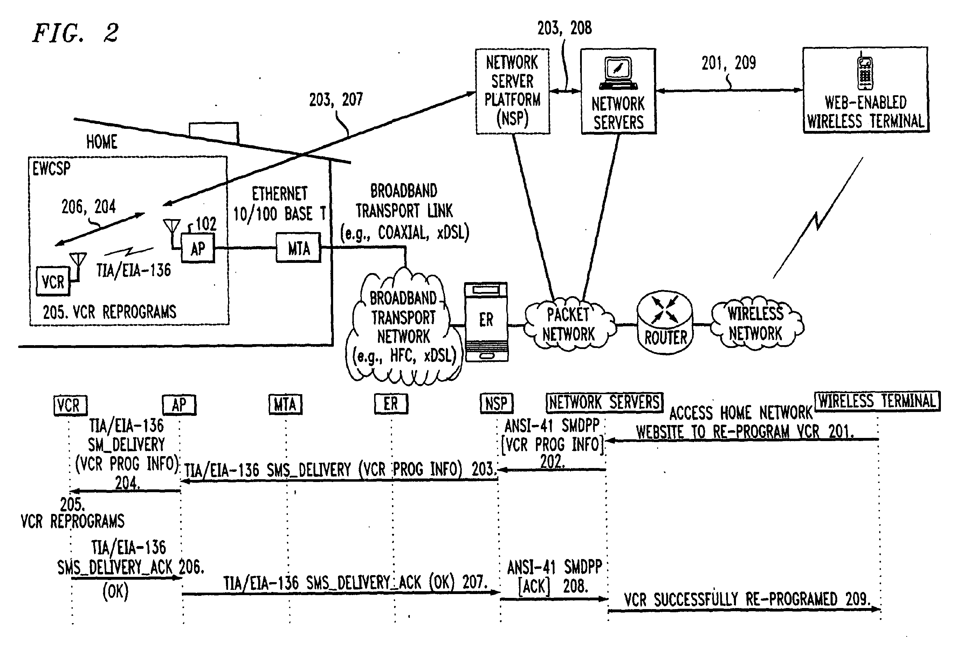

Figure 2 shows one embodiment of a scheme for call flows for a short message-based Home Control Implementation using the TIA/EIA-136 Short Message feature:

201. A subscriber has programmed his VCR to tape a major sports event while he is away from home. The VCR is equipped with a TIA/EIA-136 radio and capable of processing TIA/EIA-136 SMS messages. He discovers that the event has been delayed by an hour. He uses his Web-enabled wireless PDA to log on to the Home Networking Web site; and after an authentication procedure, he is authorized to communicate with his home network. He selects an option on the Web page to send a message to his VCR. He enters the command to reset the VCR programming to the new time.

202. The associated server creates a message (e.g., an SMS in the format of ANSI-41 SMSDeliveryPointToPoint, SMDPP) containing the VCR command, and sends this to the NSP.

203. The NSP translates the (ANSI-41) message into a TIA/EIA-136 SMS_DELIVER message. The NSP retrieves the IP address for the AP of the subscriber's home network, wraps the TIA/EIA-136 message in an IP message, and sends this to the AP.

204. When the AP receives the message, it extracts the SMS message and sends it to the VCR.

205. The VCR receives the SMS message, and resets the program time.

206. If the user wishes to be notified of the result, the VCR responds to the AP with a successful TIA/EIA-136 SMS-DELIVERY-ACK message.

207. The AP forwards the SMS_DELIVERY_ACK message to the NSP in an IP message.

208. The NSP sends a successful command acknowledgement message (e.g., in the format of ANSI-41 SMDPP) to the Web site.

209. The Web site acknowledges to the user that the VCR command was successfully executed.

### EDGE/GPRS

Another instantiation of the AP may be to support the next generation of cellular/PCS standards such as EDGE and GPRS for wireless high-speed data access.

EDGE is based on the existing infrastructure (i.e., TIA/EIA-136 or GSM) using a high-speed modulation technology to achieve data transmission speeds of up to 384 Kbps. A subscriber can use the same dual-mode terminal for voice and data access at home, on the road, and in the office. The GPRS standard currently supports sending the voice calls over the voice (GSM or TIA/EIA-136) portion of the home network, while sending the data calls over the GPRS portion of the network. The GPRS nodes (Serving GPRS Support Node (SGSN) and Gateway GPRS Support Node (GGSN)) can be private to the EWCPS system or can interwork with the macrocellular GPRS nodes to support personal and private mobility.

### IEEE 802.11 b

Another instantiation of the AP can be to support a high-speed wireless data access via the IEEE 802.11b wireless LAN standard. This will enable the EWCSP for in-home networking services such as file sharing between home PCs, sharing of computing peripherals (e.g., printers and scanners), simultaneous high-speed Internet access, and home control features based on a 11Mbps data rate. With QoS enhancements to IEEE 802.11b, EWCSP can support value-added network service such as isochronous real-time voice and video telephony. The high-speed aspects of IEEE 802.11b enable more services such as remote viewing access to security surveillance cameras.

IEEE 802.11b may be used in conjunction with TIA/EIA-136 as illustrated in the functional block diagram of the AP. A subscriber can therefore answer a telephone call in their home on their wired telephone, TIA/EIA-136 handset, or on their IEEE 802.11b handset. EWCSP can also support interworking between IEEE 802.11b and GPRS nodes to support terminal and personal mobility between the home network and the public macrocellular GPRS network.

Some sample scenarios:
a. Remote Access to Home PC - From a subscriber's work place, the subscriber wants to access the Internet from their home PC. The subscriber should be able to connect from the office network to the service provider's Home Networking Web site and in turn to the subscriber's home network through the service provider's Home Networking VPN after appropriate authentication procedures. Once connected, the subscriber should be allowed to access all the home network resources including using the home PC to surf the Internet. In effect, the home terminal is emulated on the subscriber's office PC. Therefore, the entire service provider's network (via the service provider's broadband transport network and the service provider's broadband packet network) extending to a subscriber for accessing home network resources remotely becomes realistic and essential. Another service scenario is remote access to home PC for receiving a personal fax.
b. Using comparable procedures described above, a subscriber can remotely access and control:
   i. Home security systems, e.g., real-time viewing of security camera images of their house, and enabling/disabling of alarms.
   ii. Home appliances and electronics, e.g., adjusting thermostat setting, setting VCR, turning on the dishwasher.

### Voice Call Implementation

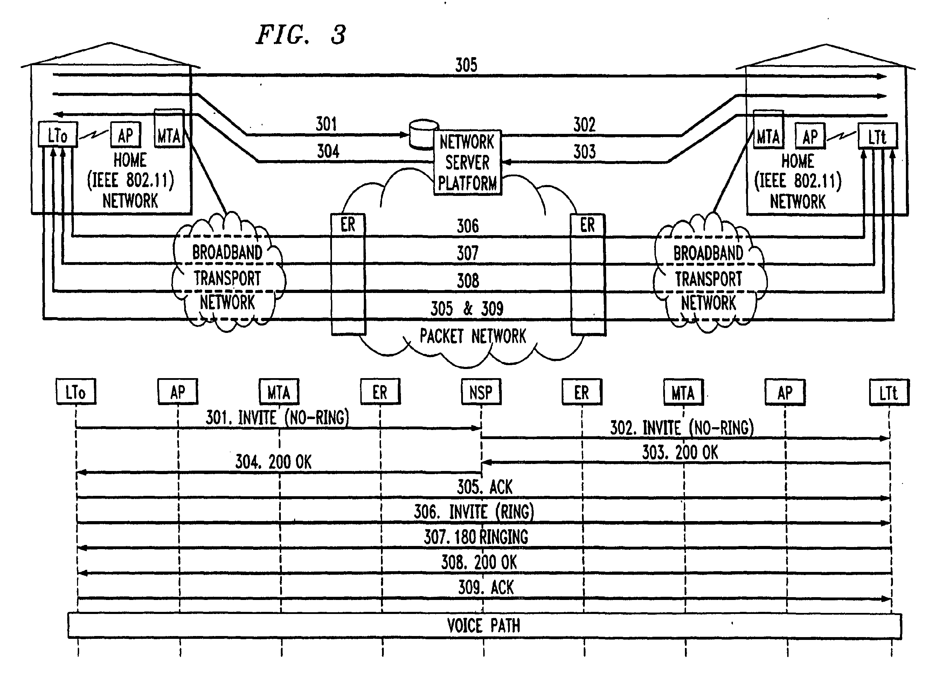

The following describes the basic service procedures including message exchanges for basic on-net voice calls in home networking services. Figure 3 shows the basic SIP call flow from one laptop to another in the home networking service area. SIP is a proposed Internet standard for packet telephony from the IETF. The call flows in this section are for illustrative purposes only, and they are not meant to follow the exact message format of a specific call signaling standard. For example, an Origination or Call Origination message can be substituted for the INVITE message. Note: User's registration procedures to the network (i.e., NSP) are not illustrated; this is assumed to have occurred prior to the call. A sample registration procedure is illustrated in the data service scenario.

Typical steps implemented for a Voice Call Implementation are set forth in Figure 3:

301. The user turns on the laptop and calls his friend using an IP address or DN. The Originating Laptop (LTo) generates an INVITE (no-ring) message and sends it to the NSP. Upon receiving the INVITE (no-ring) message, the NSP registers and authenticates/authorizes LTo for the service request.

302. The NSP maps the DN to an IP address, if needed, and confirms the location of the Terminating Laptop (LTt). The NSP generates an INVITE message and sends it to LTt.

303. Upon receiving the INVITE (no-ring), LTt determines if it can accommodate this call. If so, it generates a 200 OK response and sends it to the NSP.

304. Upon receiving the 200 OK message, the NSP forwards it to LTo. The NSP instructs the ERs that it has permission for the IP flow associated with this call. At this point the NSP has completed its transaction and does not maintain any more states for this call. The ERs take over the responsibility of maintaining, including billing, the call.

305. LTo sends an ACK message directly to LTt. This completes the three-way handshake for the INVITE (no-ring) exchange.

306. At this point, LTo attempts to reserve network resources to meet the QoS requirements of the call using such methods as Resource reSerVation Protocol (RSVP) or a priority-based method. If the resource reservation is successful, LTo sends an INVITE (ring) message directly to LTt.

307. Once LTt receives the INVITE (ring) message and successfully reserves network resources, it begins to generate RINGING to the destination user and sends a 180 RINGING message to LTo. LTo begins to play audible ringback tone to the calling user.

308. After the destination user answers the call, LTt sends a 200 OK message to LTo. LTt also begins to generate RTP packets of encoded voice and send them to LTo using the IP address and port number specified in the original INVITE (no-ring) message.

309. Upon receiving the 200 OK message, LTo responds with an ACK message. LTo plays the RTP stream that is received from LTt. LTo generates RTP packets of encoded voice and sends them to LTt using the IP address and port number specified in the original 200 OK message. The voice path is established in both directions. The associated ERs start to count the usage for billing purposes.

### TIA/EIA-136 and SIP Interworking Voice Implementation

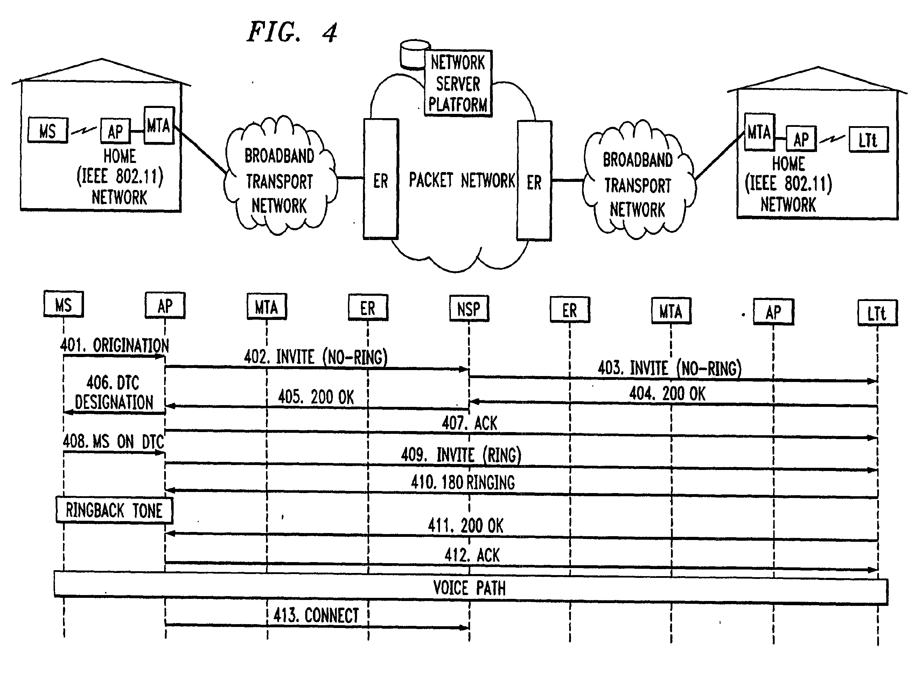

The following describes the basic service procedures including message exchanges for basic on-net voice calls between a TIA/EIA-136 MS and a laptop for home networking services. Figure 4 shows the basic TIA/EIA-136 and SIP interworking call flow from MS to a laptop both in home networking service areas. The call flows in this section are for illustrative purposes only, and they are not meant to follow the exact message format of a specific call signaling standard. Note: The MS and laptop registration procedures to the network (i.e., NSP) are not illustrated; these are assumed to have occurred prior to the call.

Figure 4 shows one embodiment of steps for a scheme for TIA/EIA-136 and SIP Interworking Call Implementation:

401. The user calls his friend using a DN via his TIA/EIA-136 MS. (Note that the MS registration has previously occurred and is not illustrated here.) The MS sends a TIA/EIA-136 Origination message to the AP.

402. The AP in turn generates an INVITE (no-ring) message and sends it to the NSP.

403. The NSP first validates the MS and authorizes the MS for the service request. Then, the NSP maps the DN to an IP address, if needed, and determines the location of the Terminating Laptop (LTt). The NSP generates an INVITE (no ring) message and sends it to LTt.

404. Upon receiving the INVITE (no-ring), LTt determines if it can accommodate this call. If so, it generates a 200 OK response and sends it to the NSP.

405. Upon receiving the 200 OK message, the NSP forwards it to the AP. The NSP also instructs the ERs that it has permission for the IP flow associated with this call. At this point, the NSP has completed its transaction. The ERs take over the responsibility of maintaining, including billing, the call.

406. The AP allocates RF resources to the MS and informs the MS of the allocated RF traffic channel via the Digital Traffic Channel (DTC) Designation message.

407. Simultaneously, the AP sends an ACK message directly to LTt. This completes the three-way handshake for the INVITE (no-ring) exchange.

408. The MS informs the AP that it (MS) is tuned to the traffic channel via the MS on DTC notification.

409. The AP attempts to reserve network resources to meet the QoS requirements of the call using such methods as RSVP or a priority-based method. If the resource reservation is successful, the AP sends an INVITE (ring) message directly to LTt.

410. Once LTt receives the INVITE (ring) message and successfully reserves network resources, it begins to generate RINGING to the destination user and sends a 180 RINGING message to the AP. The AP begins playing an audible ringback tone to the calling user.

411. When the destination user answers the call, LTt sends a 200 OK message to the AP. LTt also begins to generate RTP packets of encoded voice and sends them to AP using the IP address and port number specified in the original INVITE (no-ring) message.

412. After receiving the 200 OK message, the AP responds with an ACK message to LTt. The AP transcodes the RTP stream that is received from LTt to the TIA/EIA-136 coding scheme, if needed, for playback to the MS user. It also transcodes, if needed, the TIA/EIA-136 voice packets to RTP packets of encoded voice, and sends them to LTt using the IP address and port number specified in the original 200 OK message. The voice path is established in both directions. The associated ERs starts to count the usage for billing purposes.

413. The AP sends a Connect message to the NSP for call detail purposes of the wireless portion of the call.

### Data Service Implementation

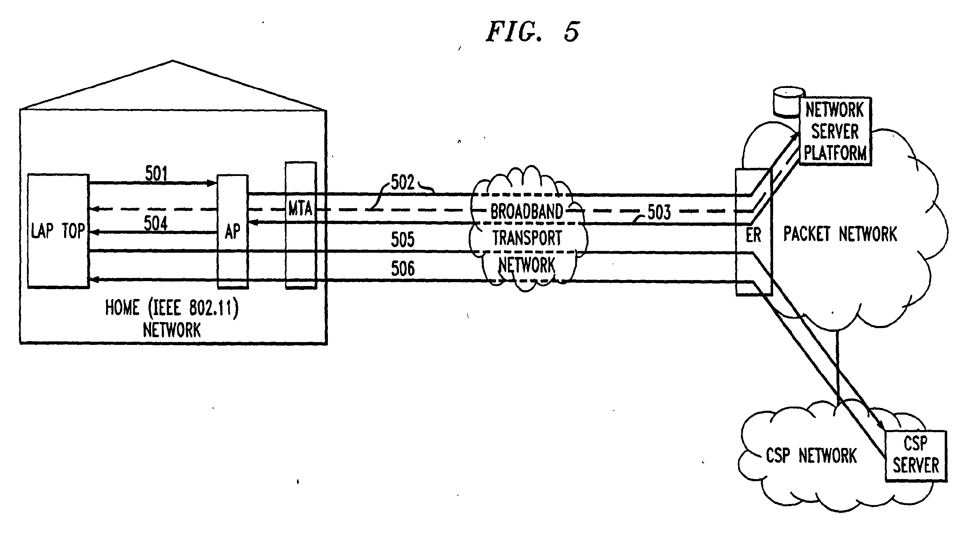

The following, as illustrated in Figure 5, describes a basic data service implementation. The user accesses network services from his wireless station (e.g., laptop) at his home. He registers with his reach number, e.g., "handle", and the services will be charged to his network account. In addition, the user can register with any available content service providers (CSPs). The Packet Network provides the transport medium for the user, but any services rendered by other providers are transparent to this network.

Figure 5 shows one embodiment of steps for an implementation for a Data Services in a Home Network:

501. The user powers up his laptop, and the laptop sends a Registration message to the AP. AP verifies that the laptop is valid for the home network.

502. AP forwards the message to NSP. As a security measure, the NSP can optionally invoke an authentication procedure with the user and/or laptop to verify the registration. If the authentication procedure fails, then the NSP ignores this registration, and the user is still considered as inactive.

503. After NSP accepts the user/laptop's registration, NSP responds with a Registration ACK to the AP.

504. The AP forwards the Registration ACK message to the laptop. The user can now start accessing/receiving all subscribed network services, including data services. The usage will be charged accordingly to their network account.

505. Optionally, if the user wants to access other CSPs for a special service, he may send the log-on request to the particular CSP server.

506. When the log-on request to the CSP is successful, the CSP allows the user to access its service(s). Any payment for these services is in addition to the fee charged by the home networking service provider.

### Roaming Data Service Implementation

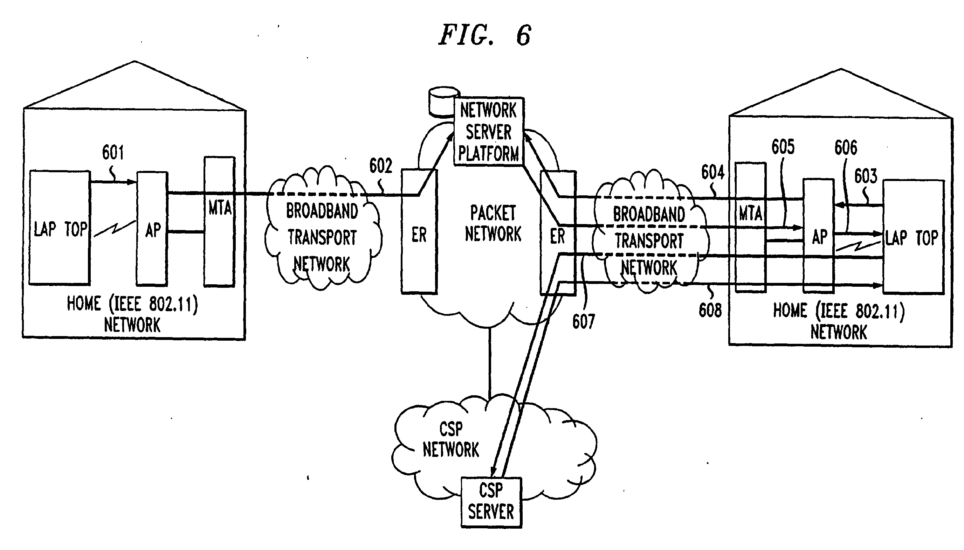

As shown in Figure 6, in the Roaming Data Service implementation, the user accesses network services from his wireless station (e.g., laptop) at his friend's home just as at his home. His reach number, e.g., "handle" remains the same, and the services will be charged to his home network account. This situation is similar to roaming in the cellular voice service. In addition, the user can register with any available content service providers.

Figure 6 shows one embodiment of steps for a Roaming Data Service implementation:

601. The user powers down his laptop at home, and the laptop sends a De-registration message to the AP.

602. The AP forwards this message to the NSP. The NSP notes that the user (e.g., johndoe@homenetwork.com) is no longer active. Any incoming services for the user will be rejected or redirected to a default location (e.g., voicemail for an incoming telephone call).

603. The user visits his friend's home (that is also equipped with an IEEE 802.11 home networking service) and powers up his laptop. The laptop sends a Registration message to the visited AP, which verifies that the laptop is valid for the visiting home network.

604. The visited AP forwards the message to NSP. As a security measure, the NSP can optionally invoke an authentication procedure with the user and/or laptop to verify the registration. The NSP notes that the user is now active and associates the user/laptop (i.e., the handle, johndoe@homenetwork.com) with its new location. The NSP will direct any new incoming services for the user/laptop to the new location. If the authentication procedure fails, then the NSP ignores this registration, and the user is still considered as inactive.

605. After NSP notes the user/laptop's new location, NSP responds with a Registration Ack to the visited AP.

606. The visited AP forwards this message to the laptop. The user can now start accessing/receiving all subscribed network services in their friend's home, and will be charged accordingly to their own home network account.

607. Optionally, if the user wants to access other CSPs for a special service, he may send the log-on request to the particular CSP server.

608. When the log-on request to the CSP is successful, the CSP allows the user to access its service(s). Any payment for these services is in addition to the fee charged by the home networking service provider.

Using the above implementation, personal mobility can also be demonstrated when the user borrows his friend's laptop to access his own Home Network services from his friend's house. All network services will still be available to him based on the user's own account.

### Description of the Access Equipment

The AP 102 is the wireless access point to the network. It can handle a variety of wireless protocols; TIA/EIA-136, GSM, GPRS/EDGE are illustrated here along with FREE 802.11b. Note that any standard wireless protocols may be used. For example, the IEEE 802.15 (Bluetooth) standard may be used instead of IEEE 802.11b, and likewise any second-generation or third-generation protocol (e.g., CDMA, CDMA2000, WCDMA, etc,) may be used instead of TIA/EIA-136. Alternatively, depending on the implementation, the AP could also just support one wireless protocol. In one embodiment, the AP 102 may be connected to the MTA 104 via an Ethernet link or the AP and MTA may be one integrated unit. The following description discusses both types.

### Separate AP and MTA

Where the AP and MTA are two separate units connected by an Ethernet link, the configuration offers the capability of connecting multiple APs (through a LAN) to support a large residence or a business environment to one MTA as its single cable access point. This also enables the AP and MTA vendors to be different.

### Functional Block Description of the Access Point

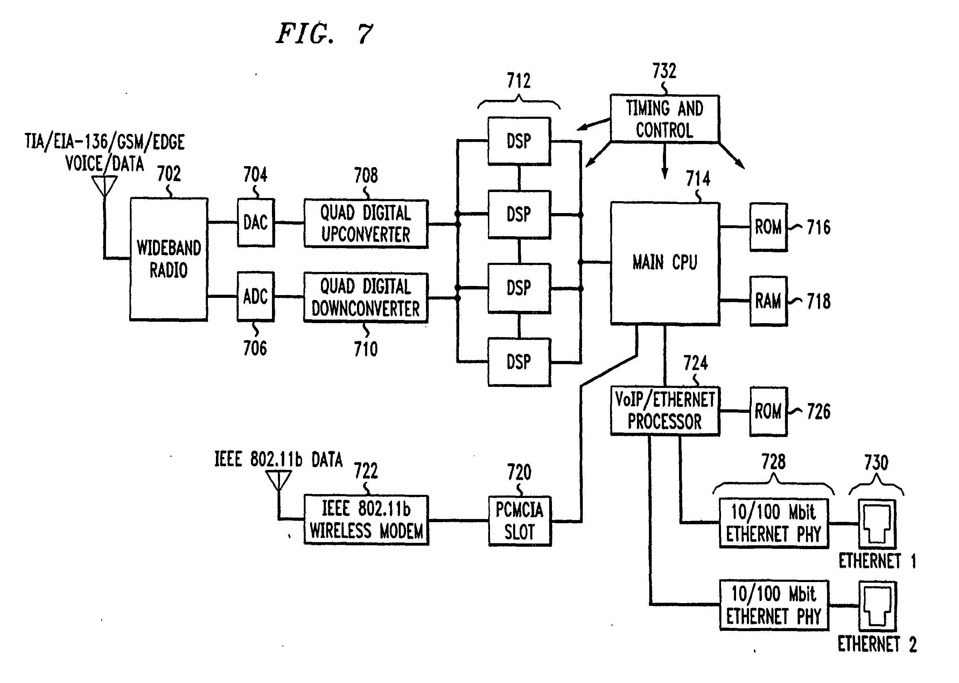

Figure 7 illustrates an exemplary embodiment of a wireless access point (AP) that can support at least one RF method such as TIA/EIA-136/GSM/EDGE and IEEE 802.11b. This diagram is for illustrative purposes; the AP may support any standard RF protocols such as IEEE 802.15 instead of IEEE 802.11b. The AP that is illustrated here supports three major interfaces through which voice and/or data may flow:

1. Ethernet interface for data and IP telephony data;

2. IEEE 802.llb wireless interface primarily for data based on the IEEE 802.11b standard but, with QoS enhancements, it is suitable for voice and entertainment distribution; and

3. Multichannel software radio interface for wireless data and voice communication with standard handsets that conform to TIA/EIA-136, GSM, EDGE, or other wireless protocols.

In Figure 7 the voice or data is received by a wideband radio 702 that is in turn coupled to a DAC 704 and a ADC 706 that convert signals for a quad digital upconverter 708 and a quad digital downconverter 710, respectively, which are coupled to a plurality of digital signal processors (DSPs) 712. The DSPs 712 are coupled to a main central processing unit (CPU) 714 that includes ROM 716 and RAM 718 memory. The main computer can be replaced by an Application Specific Integrated Circuit (ASIC), a Field Programmable Gate Array (FPGA), a Reduced Instruction Set Computer (RISC) or any combination of the above, which may or may not include memory or other computer readable media separate from or integrated with the processing device, or any other similar device able to perform the functions described herein. The Timing and Control 732 provides for timing and control of the wireless access system. In addition, a PCMCIA slot 720 may be provided for the main CPU 714, where the PCMCIA slot 720 is coupled to a wireless modem 722 for receiving data. Also, a Voice over Internet Protocol (VoIP) or Ethernet processor 724 may be coupled to the main CPU 714. Typically, the VoIP or Ethernet processor 724 is coupled to at least a ROM 726 and may provide for Ethernet connectability using, for example, a 10/100 Mbit Ethernet PHY chip 728.

As shown in Figure 7, the functions of each element of the AP typically include:

1. Wideband Radio 702: The wideband radio 702 provides a high dynamic range broadband signal from the antenna to the digital interface (ADC/706/DAC/704). The frequency band of operation is flexible and can consist of the 800MHz cellular band and the 1900MHz PCS band. Performance is sufficient to handle a range of radio standards including TIA/EIA-136, EDGE, GSM, CDPD, and analog cellular. The input to the wideband radio 702 is a broadband multi-carner transmit IF signal from the DAC. The output from the wideband radio 702 is a downconverted broadband receive IF signal that is sent to the ADC 706.

2. DAC 704: The Digital-to-Analog Converter (DAC) 704 converts the digital representation of the transmit signal from the quad digital upconverter 708 into an analog waveform for the wideband radio 702.

3. ADC 706: The Analog-to-Digital Converter (ADC) 706 converts the receive output of the wideband radio 702 into a digital representation for the quad digital downconverter 710.

4. Quad digital upconverter 708: The quad digital upconverter 708 accepts up to four separate channels of baseband information as input and outputs a digital IF signal combining the four individual carriers. The device itself is responsible for providing flexible channel modulation types through programmable symbol types, symbol rates, and filtering.

5. Quad digital downconverter 710: The quad digital downconverter 710 performs similar functions to the upconverter 708, but for receive signals. The device input is a broadband digital signal that includes the channels of interest. The downconverter 710 selects the individual channels, filters them, and provides a baseband signal output to the DSPs 712.

6. DSP 712: The DSPs 712 are responsible for executing the desired radio protocol for each of the four channels. The individual DSP will take voice or data information from the Main CPU 714 and send it via the appropriate wireless protocol to the desired mobile device, while simultaneously forwarding mobile voice/data information to the Main CPU 714. While some of the wireless protocol is handled in the Main CPU 714, most of the protocol is performed in the DSPs 712 in order to provide a simpler API to wireless mobile devices.

7. Timing and Control 732: The timing and control complex 732 is a dedicated section of programmable logic that sets the appropriate timing for the wireless protocols, and provides a flexible hardware interface between the DSPs 712 and the upconverter 708/downconverter 710 (to allow load-sharing).

8. Main CPU 714: The main CPU 714 is primarily a router of information between the various semi-autonomous endpoints (wireless, IEEE 802.11b, and Ethernet). Packets of voice and data information received over the Ethernet interface are passed to the appropriate endpoint as desired by the user. Additionally, the main CPU 714 handles some of the higher-level protocol functions for these endpoints in order to assure quality of service is maintained throughout.

9. VoIP/Ethernet Processor 724: The VoIP/Ethernet processor 724 manages the Ethernet interfaces. This device is actually a self-contained CPU with dedicated ROM, RAM, and interfaces. Its primary function is to handle IP voice conversion and encapsulation for the Ethernet, and wireless voice interfaces. The main CPU 714 controls this device and packets bound for the broadband transport interface (e.g., cable or xDSL) are also passed through the main CPU 714.

10. VoIP/Ethernet Processor ROM 726; Flash program memory for the VoIP Ethernet Processor 724.

11. Main CPU ROM 716: Flash program memory for the Main CPU 714.

12. Main CPU RAM 718: Program and data memory for the Main CPU 714.

13. 10/100 Mbit Ethernet PHY 728: The Ethernet PHY chip performs the analog modulation/demodulation functions necessary to connect the MAC functions within the VoIP/Ethernet processor to an attached Ethernet device.

14. Ethernet port 730: RJ-45 Ethernet jack.

15. IEEE 802.11b wireless modem 722: The IEEE 802.11b wireless modem 722 is a PCMCIA device that attaches (through the PCMCIA slot interface) to the main CPU 714. The device handles wideband data communication with wireless laptop computers based on the IEEE 802.11b standard, and can be enhanced to provide QoS to these devices for streaming multimedia applications. Note that another standard type of wireless modem such as IEEE 802.15 can also be used.

16. PCMCIA slot 720: The PCMCIA slot 720 is a standard peripheral connection mechanism that allows the attachment of various peripheral devices to the main CPU. It is used here to interface with the IEEE 802.11b wireless modem. Note that this slot can also be used to interface with another standard type of wireless modem such as IEEE 802.15.

### AP Signal Flow

The AP generally processes the signals from the three major interfaces:
a. TIA/EIA-136/GSM/EDGE: The radio circuitry, the DSPs 712, and the main CPU 714 process the signals from the TIA/EIA-136/GSM/EDGE wireless devices. The primary protocol-specific processes for the wireless interface are handled by the DSPs 712. while the data and voice information to/from the wireless device is forwarded to the main CPU 714 for routing. Depending on what communication is desired, the wireless voice/data may be routed to the Ethernet interface (for intranet telephony or data) or the IEEE 802.11b interface (intranet telephony or data).
b. IEEE 802.11b: Information flowing through the IEEE 802.11b interface may be IP telephony packets, streaming multimedia data, or regular internet/intranet data. The main CPU 714 establishes data priority and ensures QoS to the wireless client, so all data is passed through it. Data to/from the IEEE 802.11b interface may be routed to the Ethernet interface (for intranet telephony or data) or the TIA/EIA-136/GSM/EDGE interface for wireless telephony or data.
c. Ethernet: The Ethernet interface provides a wired connection for MTA, computers, and IP telephony devices. As Ethernet does not currently support QoS, this is primarily seen as a data interface. Data from this interface is passed to the main CPU 714 and can be routed to other endpoints in the system (TIA/EIA-136/GSM/EDGE, IEEE 802.11b, or the other Ethernet interfaces) or passed through the broadband transport interface (e.g., cable or xDSL) on the MTA to the Internet.

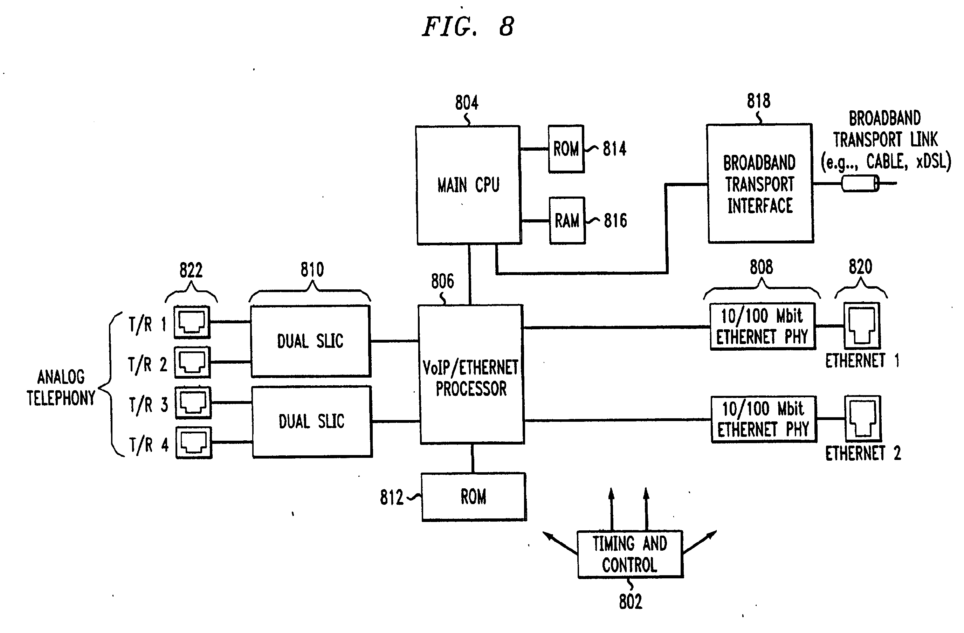

Figure 8 illustrates one embodiment of a Functional Block Description of the MTA.

Typically, there are three major interfaces through which voice and/or data may flow:

1. Broadband transport interface (e.g., cable, xDSL, etc) supporting entertainment, data, video, and voice;

2. Ethernet interface for data and IP telephony data;

3. Analog telephony interface for analog voice communications.

The MTA connects to the service provider's broadband transport network (e.g., HFC plant, xDSL, etc) via the broadband transport interface (e.g., cable, xDSL, etc) and connects to the AP via an Ethernet interface. The service provider's broadband packet network distributes the services through the MTA and the AP to the end devices.

Typically, the functions of the elements of the MTA include:

1. Timing and Control 802: The timing and control complex 802 is a dedicated section of programmable logic that sets the appropriate timing and control for the protocols and for all the other elements.

2. Main CPU 804: The main CPU 804 is primarily a router of information between the various semi-autonomous endpoints (broadband transport interface, Ethernet, and analog telephony). Packets of voice and data information received over the broadband transport interface are passed to the appropriate endpoint as desired by the user. Additionally, the main CPU handles some of the higher-level protocol functions for these endpoints in order to assure quality of service is maintained throughout.

3. VoIP/Ethernet Processor 806: The VoIP/Ethemet Processor 806 manages the Ethernet 808 and Subscriber's Line Interface Circuit (SLIC) 810 interfaces. This device is actually a self-contained CPU with dedicated ROM, RAM, and interfaces. Its primary function is to handle IP voice conversion and encapsulation for the Ethernet, and analog telephony interfaces. The main CPU 804 controls the VoIP/Ethernet Processor 806, and packets bound for the broadband transport interface are also passed through the main CPU 804. The main computer can be replaced by an Application Specific Integrated Circuit (ASIC), a Field Programmable Gate Array (FPGA), a Reduced Instruction Set Computer (RISC) or any combination of the above, which may or may not include memory or other computer readable media separate from or integrated with the processing device, or any other similar device able to perform the functions described herein.

4. VoIP/Ethemet Processor ROM 812: Flash program memory for the VoIP Ethernet Processor 8.06

5. Main CPU ROM 814: Flash program memory for the Main CPU 804.

6. Main CPU RAM 816: Program and data memory for the Main CPU 804.

7. Broadband Transport Interface 818: The broadband transport interface 818 utilizes a broadband transport link such as cable or xDSL to connect the main CPU 804 to the service provider's network (e.g., DOCSIS 1.1 CMTS in the cable head-end for the HFC transport network). The chipset that performs this function handles modulation, demodulation, error correction, and framing compatible with the transport standard, e.g., DOCSIS.

8. 10/100 Mbit Ethernet PHY 808: The Ethernet PHY chip 808 performs the analog modulation/demodulation functions necessary to connect the MAC functions within the VoIP/Ethernet processor 806 to an attached Ethernet device.

9. Ethernet port 820: RJ-45 Ethernet jack.

10. Dual SLIC 810: The Dual SLIC circuits 810 interface digital µ-law coded audio to standard tip/ring telephones. These interfaces are useful for providing connections to legacy analog telephony devices.

11. T/R port 822: Standard RJ-11 Telephone jack to interface with analog telephone sets.

### MTA Signal Flow

This section describes how the signals from the three major interfaces are processed by the MTA:
a. T/R interface 822: The tip/ring interface 822 is strictly a voice interface. IP voice packets (processed by the VoIP/Ethernet processor 806) to/from this interface may be forwarded to any of the other interfaces (broadband transport or Ethernet) via the main CPU 804.
b. Broadband transport interface 818: The broadband transport interface 818 is the primary path for backhaul of data and voice packets. The equipment in the service provider's broadband packet network (e.g., the CMTS in the cable head-end) will provide voice and data connections to the Internet and PSTN. Note that for the cable-based broadband transport interface for the HFC plant, QoS over this interface is controlled by the DOCSIS standard and overseen by the main CPU. Data from the broadband transport interface may be selectively routed to the other interfaces.
c. Ethernet interface 808: The Ethernet interface 808 provides a wired connection for AP, computers, and IP telephony devices. As Ethernet does not currently support QoS, this is primarily seen as a data interface. Data from this interface is passed to the main CPU and can be routed to other endpoints in the system, or passed through the broadband transport interface to the Internet.

### Intelligent Broadband Access Point (IBAP) (AP Integrated with the MTA)

As shown in the functional block diagram in Figure 9, the Intelligent Broadband Access Point (IBAP) is an AP that is integrated with the MTA. Figure 9 depicts an exemplary embodiment of an IBAP. This integrated unit may be useful in a residence or SOHO environment that can be adequately serviced by a single wireless access point.

The IBAP supports five major interfaces through which voice and/or data may flow:

1. Broadband transport interface (e.g., cable, xDSL, etc) supporting entertainment, data, video, and voice;

2. Ethernet interface for data and IP telephony data;

3. Analog telephony interface for analog voice communications;

4. IEEE 802.11b wireless interface primarily for data based on the IEEE 802.11b standard, but with QoS enhancements it is suitable for voice and entertainment distribution;

5. Multichannel software radio interface for wireless data and voice communication with standard handsets that conform to TIA/EIA-136, GSM, EDGE, or other wireless protocols.

The typical functions of the elements of the IBAP (an AP Integrated with the MTA), as illustrated in Figure 9, include:

1. Wideband Radio 902: The wideband radio 902 provides a high dynamic range broadband signal from the antenna to the digital interface (ADC 904/DAC 906). The frequency band of operation is flexible and can consist of the 800MHz cellular band and the 1900MHz PCS band. Performance is sufficient to handle a range of radio standards including TIA/EIA-136, EDGE, CDMA, WCDMA, CDMA2000, GSM, CDPD, and analog cellular. The input to the wideband radio is a broadband multi-carrier that transmits IF signal from the DAC 906. The output from the wideband radio is a downconverted broadband receive IF signal that is sent to the ADC 904.

2. DAC 906: The Digital-to-Analog Converter (DAC) 906 converts the digital representation of the transmit signal from the QUADdigital upconverter 908 into an analog waveform for the wideband radio 902.

3. ADC 904: The Analog-to-Digital Converter (ADC) 904 converts the receive output of the wideband radio 902 into a digital representation for the QUAD digital downconverter 910.

4. Quad digital upconverter 908: The quad digital upconverter 908 accepts up to four separate channels of baseband information as input and outputs a digital IF signal combining the four individual carriers. The device itself is responsible for providing flexible channel modulation types through programmable symbol types, symbol rates, and filtering.

5. Quad digital downconverter 910: The quad digital downconverter 910 performs similar functions to the upconverter 908, but for receive signals. The device input is a broadband digital signal that includes the channels of interest. The downconverter 910 selects the individual channels, filters them, and provides a baseband signal output to the DSPs 912.

6. DSPs 912: The DSPs 912 are responsible for executing the desired radio protocol for each of the four channels. The individual DSP will take voice or data information from the Main CPU 914 and send it via the appropriate wireless protocol to the desired mobile device, while simultaneously forwarding mobile voice/data information to the Main CPU 914. While some of the wireless protocol is handled in the Main CPU 914, most is done in the DSPs 912 in order to provide a simpler API to wireless mobile devices.

7. Timing and Control 916: The timing and control complex 916 is a dedicated section of programmable logic that sets the appropriate timing for the wireless protocols, all the other elements, and provides a flexible hardware interface between the DSPs 912 and the upconverter 908/downconverter 910 (to allow load-sharing).

8. Main CPU 914: The main CPU 914 is primarily a router of information between the various semi-autonomous endpoints (broadband transport interface, wireless, IEEE 802.11b, Ethernet, and analog telephony). Packets of voice and data information received over the broadband transport interface are passed to the appropriate endpoint as desired by the user. Additionally, the main CPU 914 handles some of the higher-level protocol functions for these endpoints in order to assure quality of service is maintained throughout.

9. VoIP/Ethemet Processor 918: The VoIP/Ethemet processor 918 manages the Ethernet 920 and SLIC 922 interfaces. This device is actually a self-contained CPU with dedicated ROM, RAM, and interfaces. Its primary function is to handle IP voice conversion and encapsulation for the Ethernet, wireless voice, and analog telephony interfaces. The main CPU controls this device and packets bound for the broadband transport interface are also passed through the main CPU. The main computer can be replaced by an Application Specific Integrated Circuit (ASIC), a Field Programmable Gate Array (FPGA), a Reduced Instruction Set Computer (RISC) or any combination of the above, which may or may not include memory or other computer readable media separate from or integrated with the processing device, or any other similar device able to perform the functions described herein.

10. VoIP/Ethemet Processor ROM 924: Flash program memory for the VoIP Ethernet Processor 918.

11. Main CPU ROM 926: Flash program memory for the Main CPU 914.

12. Main CPU RAM 928: Program and data memory for the Main CPU 914.

14. Broadband transport interface 930: The broadband transport interface 930 utilizes a broadband transport link such as cable or xDSL to connect the main CPU 914 to the service provider's network (e.g., DOCSIS 1.1 CMTS in the cable head-end for the HFC transport network). The chipset that performs this function handles modulation, demodulation, error correction, and framing compatible with the appropriate standard (e.g., DOCSIS).

15. 10/100 Mbit Ethernet PHY 920: The Ethernet PHY chip 920 performs the analog modulation/demodulation functions necessary to connect the MAC functions within the VoIP/Ethernet processor 918 to an attached Ethernet device.

16. Ethernet port 932: RJ-45 Ethernet jack.

17. IEEE 802.11b wireless modem 936: the IEEE 802.11b wireless modem 936 is a PCMCIA device that attaches (through the PCMCIA slot interface 934) to the main CPU 914. The device handles wideband data communication with wireless laptop computers based on the IEEE 802.11b standard, and can be enhanced to provide QoS to these devices for streaming multimedia applications. Note that another type of standard wireless modem such as IEEE 802.15 can also be used.

18. PCMCIA slot 934: The PCMCIA slot 934 is a standard peripheral connection mechanism that allows the attachment of various peripheral devices to the main CPU 914. It is used here to interface with the IEEE 802.11b wireless modem 936. Note that this slot can also be used to interface with any standard wireless modem such as an IEEE 802.15 wireless modem.

19. Dual SLIC 922: The Dual SLIC circuits 922 interface digital u-law coded audio to standard tip/ring telephones 938. These interfaces are useful for providing connections to legacy analog telephony devices.

20. T/R port 940: Standard RJ-11 Telephone jack to interface with analog telephone sets.

### IBAP Signal Flow

Signals from the five major interfaces are typically processed by the IBAP as follows:
a. TIA/EIA-136/GSM/EDGE 942: the radio circuitry, the DSPs 912, and the main CPU 914 process the signals from the TIA/EIA-136/GSM/EDGE wireless devices. The DSPs 912 handle the primary protocol-specific processing for the wireless interface, while the data and voice information to/from the wireless device is forwarded to the main CPU 914 for routing. Depending on what communication is desired, the wireless voice/data may be routed to the broadband transport interface (for IP telephony or data), the Ethernet interface (for intranet telephony or data), the analog telephony interface ("local call"), or the IEEE 802.11b interface (intranet telephony or data).
b. IEEE 802.11b: Information flowing through the IEEE 802.11b interface may be IP telephony packets, streaming multimedia data, or regular internet/intranet data. The main CPU 914 establishes data priority and ensures QoS to the wireless client, so all data is passed through it. Data to/from the IEEE 802.11b interface may be routed to any of the other interfaces, TIA/EIA-136/GSM/EDGE (for wireless telephony or data), broadband transport interface (for IP telephony or data), Ethernet interface (for intranet telephony or data, or the analog telephony interface ("local calls").
c. T/R 940: The tip/ring interface is strictly a voice interface. IP voice packets to/from this interface may be forwarded to any of the other interfaces (TIA/EIA-136/GSM/EDGE, IEEE 802.11b, broadband transport interface or Ethernet) via the main CPU 914.
d. Broadband transport interface 930: The broadband transport interface 930 is the primary path for backhaul of data and voice packets. The equipment in the service provider's broadband packet network (e.g., CMTS in the cable head-end for a HFC transport network) will provide voice and data connections to the Internet and PSTN. Note that for a HFC transport network, the QoS over this interface is controlled by the DOCSIS standard and overseen by the main CPU. Data from the broadband transport interface may be selectively routed to the other interfaces.
e. Ethernet interface 920: The Ethernet interface 920 provides a wired connection for computers and IP telephony devices. As Ethernet does not currently support QoS, this is primarily seen as a data interface. Data from this interface is passed to the main CPU 914 and can be routed to other endpoints in the system, or passed through the broadband transport interface 930 to the Internet.

Although the present invention has been described in relation to particular preferred embodiments thereof, many variations, equivalents, modifications and other uses will become apparent to those skilled in the art. It is preferred, therefore, that the present invention be limited not by the specific disclosure herein, but only by the appended claims

## Claims

1. A method for providing network-centric service distribution to a plurality of local wireless devices (118) at an enterprise location, the method comprising the steps of:
providing a wireless access service in a local ResidentialBusiness Broadband Network at the enterprise location through use of a broadband packet network (106) that facilitates end-to-end packet telecommunication services and a broadband transport network (120) that is coupled between the broadband packet network and the enterprise location the local ResidentialBusiness Broadband Network supporting communication among the plurality of local wireless devices, as well as supporting communication between said plurality of local wireless devices and the broadband packet network (106);
providing a Media Terminal Adapter (104) coupled to at least one access port (102) to receive and send wireless signals to a plurality of wireless RBN devices in accordance with call and service termination functions, the Media Terminal Adapter providing access functions for connecting said broadband packet network (106) to the local Residential/Business Broadband Network via the broadband transport network, the Media Terminal Adapter (104) supporting telephony interworking among TlNEIA-136 standards, Enhanced Data for Global Evolution/General Packet Radio Service standards, IEEE 802.11b standards and IEEE 802.15 standards;
controlling and administering, via the broadband packet network (106), operations of the access port (102) and service requests of the plurality of local wireless devices associated therewith via a Network Service Platform (108) coupled to the broadband packet network (106); and
delivering packet telephony service via a private branch exchange (110) in communication with the Media Terminal Adapter (104) of the Residential/Business Broadband Network and via the service provider's broadband transport network and the service provider's broadband packet network via the broadband transport network and Media Terminal Adapter (104).

2. A method according to claim 1 wherein communication between a remote subscriber and the subscriber's enterprise location is facilitated by access functions performed by the local Residential/Business Broadband Network.

3. A method according to claim 1 wherein the access port (102) comprises a miniaturised radio base station for establishing analogue and digital communication channels with said plurality of local wireless devices.

4. A method according to claim 1 wherein the connection between said access port (102) and said Media Terminal Adapter (104) is an Ethernet interface.

5. A method according to claim 1 wherein the plurality of local wireless devices includes any home devices and resources, computing devices and resources and appliances capable of communicating with said access port.

6. A method according to claim 1 wherein said access port (102) communicates with said plurality of local wireless devices via at least one of a standardised air interface used for analogue, digital, circuit, and packet communications to narrowband wireless devices, computing-telephony resources and appliances.

7. A method according to claim 1, further comprising the step of sending instructions and information from a device in communication with said broadband packet network via said broadband transport network to said Media Terminal Adapter (104) coupled to said access port to said plurality of local wireless devices.

8. A method according to claim 7, further comprising the step of distributing instructions and information including call features and related Operation, Administration and Maintenance instructions via a communication link between said access port (102) and said plurality of local wireless devices (118).

9. A method according to claim 8, further comprising the step of said device in communication with said broadband packet network (106) receiving information from said plurality of local wireless devices via said communication link between said plurality of local wireless devices, and said access port (102) via said communication link between said access port (102) and said Media Terminal Adapter (104), via said broadband transport network, via said broadband packet network.

10. A method according to claim 1 or 2, wherein said access functions are provided by a single unit comprising the Media Terminal Adapter (104) integrated with the access port (102).

11. A method according to claim 10 wherein the access port (102) comprises a miniaturised radio base station for establishing analogue and digital communication channels with said plurality of local wireless devices.

12. A method according to claim 10 wherein the plurality of local wireless devices includes any home devices and resources, computing devices and resources and appliances capable of communicating with said access port (102).

13. A method according to claim 10, wherein said access port (102) communicates with said plurality of local wireless devices via at least one of a standardised air interface used for analogue, digital, circuit, and packet communications to narrowband and broadband wireless devices, computing-telephony resources and appliances.

14. A method according to claim 1 or 2, wherein said call and service termination functions are provided by an access port sending and receiving wireless signals to said plurality of local wireless devices.

15. A method according to claim 1 or 2 and comprising coupling the local Residential/Business Broadband Network to said broadband transport network using a Hybrid Fibre Coax cable system.

16. A method according to claim 1 or 2 and comprising coupling the local ResidentiallBusiness Broadband Network to said broadband transport network using a generic Digital Subscriber Line.

17. A method according to claim 1 or 2, wherein the local Residential/Business Broadband Network is either a residential network at a residential enterprise location or a business network at a business enterprise location.

18. A method according to claim 17 wherein said business network is a public network.

19. A network-centric service distribution architecture that facilitates end-to-end packet telecommunication services comprising
a plurality of local wireless devices (118) at an enterprise location;
a broadband packet network (106) for facilitating end-to-end packet telecommunication services; and a broadband transport network (120) coupled between the broadband packet network and the enterprise location;
wherein the network-ceritric service distribution architecture further comprises
a local Residential/Business Broadband Network to facilitate communication among the plurality of local wireless devices, as well as communication between said plurality of local wireless devices and the broadband packet network via the broadband transport network, the local Residential/Business Broadband Network comprising
a Medial Terminal Adapter (104) coupled to at least one access port (102) and the broadband transport network (120), the Media Terminal Adapter (104) for providing access functions for connecting the local Residential/Business Broadband Network to the broadband packet network via the broadband transport network, the at least one access port (102) arranged to receive and send wireless signals to the plurality of local wireless devices, the Media Terminal Adapter (104) supporting telephony interworking among TIA/EIA-136 standards, Enhanced Data for Global Evolution/General Packet Radio Service standards, IEEE 802.11b standards and IEEE 802.15 standards;
a Network Server Platform (108), coupled to the broadband packet network (106) for controlling and administering via the broadband packet network, operations of the access port and service requests of the plurality of local wireless devices associated therewith; and
a private branch exchange (110) coupled to the Media Terminal Adapter (104) of the Residential/Business Broadband Network and to the service provider's broadband transport network and the service provider's broadband packet network, via the broadband transport network for the delivery of packet telephony service.

20. A network-centric service distribution architecture of claim 19 wherein said architecture supports communication among the plurality of local wireless devices at an enterprise location, as well as between the plurality of local wireless devices and wireless devices in a public cellular environment (136).

21. A network-centric service distribution architecture of claim 19 wherein the enterprise location is one of a residence, a Small Office-Home Office, a business or a public use environment.

22. A network-cenule service distribution architecture of claim 21 wherein the enterprise location is a business, and the private branch exchange (110) is coupled between the Media Terminal Adapter and the broadband transport network.

23. A network-centric service distribution architecture of claim 22, wherein the private branch exchange is further coupled to a Public Switched Telephone Network (128) for circuit-switched telecommunication services.

24. A network-centric service distribution architecture of claim 20 wherein the local Residential/Business Broadband Network is coupled to the broadband transport network and the broadband transport network comprises a hybrid fibre coaxial cable system, a generic digital subscriber line system, a fixed wireless system, or a fibre optic system.

25. A network-centric service distribution architecture of claim 19, wherein the at least one access port is a miniaturized radio base station for establishing analogue and digital communication channels so as to interwork between wireless and packet telephony protocols.

26. A network-centric service distribution architecture of claim 19, wherein the at least one access port connected to the Media Terminal Adapter is an Ethernet interface.

27. A network-centric service distribution architecture of claim 19, wherein the at least one access port and the Media Terminal Adapter are integrated into a single unit to provide functions of the access port and the Media Terminal Adapter.

28. A network-centric service distribution architecture of claim 27, wherein the Medial Terminal Adapter is integrated with either a cable or an generic digital subscriber line modem to form a single unit, wherein the single unit digitally encodes a multimedia signal to form an encoded signal, encapsulates the encoded signal in Internet Protocol packets, and delivers the Internet Protocol packets to the broadband packet network via the broadband transport network, using the integrated cable or generic digital subscriber line modem.

29. A network-centric service distribution architecture of claim 28, wherein the Media Terminal Adapter maintains a call state for each active telephone line and participates in call signalling and telephony feature implementation.

30. A network-centric service distribution architecture of claim 19, wherein the plurality of local wireless devices includes home-business devices, computing-telephony resources and computing-telephony appliances.

## Patentansprüche

1. Verfahren zum Bereitstellen von netzzentrischer Dienstverteilung an eine Vielzahl von lokalen drahtlosen Vorrichtungen (118) an einem Unternehmensstandort, das Verfahren die folgenden Schritte umfassend:
Bereitstellen eines drahtlosen Zugangsdienstes in einem lokalen Heim-/Firmen-Breitbandnetz an dem Unternehmensstandort durch Verwendung eines Breitbandpaketnetzes (106), das Ende-zu-Ende-Pakettelekommunikationsdienste erleichtert, und eines Breitbandtransportnetzes (120), das zwischen dem Breitbandpaketnetz und dem Unternehmensstandort verbunden ist, wobei das lokale Heim-/Firmen-Breitbandnetz Kommunikation unter der Vielzahl von lokalen drahtlosen Vorrichtungen unterstützt sowie Kommunikation zwischen der Vielzahl von lokalen drahtlosen Vorrichtungen und dem Breitbandpaketnetz (106) unterstützt;
Bereitstellen eines Medienendgerätadapters (104), der an mindestens einen Zugangsport (102) gekoppelt ist, um drahtlose Signale zu empfangen und an eine Vielzahl von drahtlosen RBN-Vorrichtungen in Übereinstimmung mit Verbindungs- und Dienstauslösungsfunktionen zu senden, wobei der Medienendgerätadapter Zugangsfunktionen zum Verbinden des Breitbandpaketnetzes (106) mit dem lokalen Heim-/Firmen-Breitbandnetz über das Breitbandtransportnetz bereitstellt, wobei der Medienendgerätadapter (104) Telefonie-Interworking zwischen TIA/EIA-136-Standards, Enhanced-Datafor-Global-Evolution/General-Packet-Radio-Service-Standards, IEEEE-802.11b-Standards und IEEE-802.15-Standards unterstützt;
Steuern und Verwalten, über das Breitbandpaketnetz (106), von Operationen des Zugangsports (102) und Dienstanforderungen der Vielzahl von lokalen drahtlosen Vorrichtungen, die damit über eine Netzdienstplattform (108), die an das Breitbandpaketnetz (106) gekoppelt ist, assoziiert sind; und
Liefern von Pakettelefoniedienst über eine Nebenstellenanlage (110) in Kommunikation mit dem Medienendgerätadapter (104) des Heim-/Firmen-Breitbandnetzes und über das Breitbandtransportnetz des Dienstanbieters und das Breitbandpaketnetz des Dienstanbieters über das Breitbandtransportnetz und den Medienendgerätadapter (104).

2. Verfahren nach Anspruch 1, wobei Kommunikation zwischen einem entfernten Teilnehmer und dem Unternehmensstandort des Teilnehmers durch Zugangsfunktionen, die von dem lokalen Heim-/Firmen-Breitbandnetz ausgeführt werden, erleichtert wird.

3. Verfahren nach Anspruch 1, wobei der Zugangsport (102) eine miniaturisierte Funkbasisstation zum Einrichten von analogen und digitalen Kommunikationskanälen mit der Vielzahl von lokalen drahtlosen Vorrichtungen umfasst.

4. Verfahren nach Anspruch 1, wobei die Verbindung zwischen dem Zugangsport (102) und dem Medienendgerätadapter (104) eine Ethernet-Schnittstelle ist.

5. Verfahren nach Anspruch 1, wobei die Vielzahl von lokalen drahtlosen Vorrichtungen beliebige Heimvorrichtungen und -ressourcen, Computervorrichtungen und -ressourcen und Geräte umfasst, die zur Kommunikation mit dem Zugangsport imstande sind.

6. Verfahren nach Anspruch 1, wobei der Zugangsport (102) über eine standardmäßige Luftschnittstelle, die für analoge, digitale, Leitungs- und Paketkommunikationen zu drahtlosen Schmalbandvorrichtungen verwendet wird, und/oder Computer-Telefonie-Ressourcen und -Geräten mit der Vielzahl von lokalen drahtlosen Vorrichtungen kommuniziert.

7. Verfahren nach Anspruch 1, weiter den Schritt umfassend, Anweisungen und Informationen von einer Vorrichtung in Kommunikation mit dem Breitbandpaketnetz über das Breitbandtransportnetz an den Medienendgerätadapter (104), der an den Zugangsport gekoppelt ist, an die Vielzahl von lokalen drahtlosen Vorrichtungen zu senden.

8. Verfahren nach Anspruch 7, weiter den Schritt umfassend, Anweisungen und Informationen, die Verbindungsmerkmale und dazu in Beziehung stehende Operations-, Verwaltungs- und Wartungsanweisungen umfassen, über eine Kommunikationsverbindung zwischen dem Zugangsport (102) und der Vielzahl von lokalen drahtlosen Vorrichtungen (118) zu verteilen.

9. Verfahren nach Anspruch 8, weiter den Schritt umfassend, dass die Vorrichtung in Kommunikation mit dem Breitbandpaketnetz (106), Informationen über das Breitbandtransportnetz von der Vielzahl von lokalen drahtlosen Vorrichtungen über die Kommunikationsverbindung zwischen der Vielzahl von lokalen drahtlosen Vorrichtungen und dem Zugangsport (102) über die Kommunikationsverbindung zwischen dem Zugangsport (102) und dem Medienendgerätadapter (104) über das Breitbandtransportnetz empfängt.

10. Verfahren nach Anspruch 1 oder 2, wobei die Zugangsfunktionen von einer einzelnen Einheit, die den mit dem Zugangsport (102) integrierten Medienendgerätadapter (104) umfasst, bereitgestellt werden.

11. Verfahren nach Anspruch 10, wobei der Zugangsport (102) eine miniaturisierte Funkbasisstation zum Einrichten von analogen und digitalen Kommunikationskanälen mit der Vielzahl von lokalen drahtlosen Vorrichtungen umfasst.

12. Verfahren nach Anspruch 10, wobei die Vielzahl von lokalen drahtlosen Vorrichtungen beliebige Heimvorrichtungen und -ressourcen, Computervorrichtungen und -ressourcen und Geräte enthält, die zur Kommunikation mit dem Zugangsport (102) imstande sind.

13. Verfahren nach Anspruch 10, wobei der Zugangsport (102) über eine standardmäßige Luftschnittstelle, die für analoge, digitale, Leitungs- und Paketkommunikationen zu drahtlosen Schmalband- und Breitbandvorrichtungen verwendet wird, und/oder Computer-Telefonie-Ressourcen und -Geräten mit der Vielzahl von lokalen drahtlosen Vorrichtungen kommuniziert.

14. Verfahren nach Anspruch 1 oder 2, wobei die Verbindungs- und Dienstauslösungsfunktionen von einem Zugangsport bereitgestellt werden, der drahtlose Signale an die Vielzahl von lokalen drahtlosen Vorrichtungen sendet und empfängt.

15. Verfahren nach Anspruch 1 oder 2 und umfassend, das lokale Heim-/Firmen-Breitbandnetz unter Verwendung eines HFC-Kabelsystems an das Breitbandtransportnetz zu koppeln.

16. Verfahren nach Anspruch 1 oder 2 und umfassend, das lokale Heim-/Firmen-Breitbandnetz unter Verwendung einer allgemeinen digitalen Teilnehmerleitung an das Breitbandtransportnetz zu koppeln.

17. Verfahren nach Anspruch 1 oder 2, wobei das lokale Heim-/Firmen-Breitbandnetz entweder ein Heimnetz an einem Heimunternehmensstandort oder ein Firmennetz an einem Firmenunternehmensstandort ist.

18. Verfahren nach Anspruch 17, wobei das Firmennetz ein öffentliches Netz ist.

19. Netzzentrische Dienstverteilungsarchitektur, die Ende-zu-Ende-Pakettelekommunikationsdienste erleichtert, umfassend
eine Vielzahl von lokalen drahtlosen Vorrichtungen (118) an einem Unternehmensstandort;
ein Breitbandpaketnetz (106) zur Erleichterung von Ende-zu-Ende-Pakettelekommunikationsdiensten; und
ein Breitbandtransportnetz (120), das zwischen dem Breitbandpaketnetz und dem Unternehmensstandort verbunden ist;
wobei die netzzentrische Dienstverteilungsarchitektur weiter umfasst
ein lokales Heim-/Firmen-Breitbandnetz zur Erleichterung von Kommunikation unter der Vielzahl von lokalen drahtlosen Vorrichtungen sowie von Kommunikation zwischen der Vielzahl von lokalen drahtlosen Vorrichtungen und dem Breitbandpaketnetz über das Breitbandtransportnetz, das lokale Heim-/Firmen-Breitbandnetz umfassend
einen Medienendgerätadapter (104), der an mindestens einen Zugangsport (102) und das Breitbandtransportnetz (120) gekoppelt ist, zur Bereitstellung von Zugangsfunktionen zum Verbinden des lokalen Heim-/Firmen-Breitbandnetzes über das Breitbandtransportnetz mit dem Breitbandpaketnetz, wobei der mindestens eine Zugangsport (102) angeordnet ist, um drahtlose Signale zu empfangen und an die Vielzahl von lokalen drahtlosen Vorrichtungen zu senden, wobei der Medienendgerätadapter (104) Telefonie-Interworking zwischen TIA/EIA-136-Standards, Enhanced-Data-for-Global-Evolution/General-Packet-Radio-Service-Standards, IEEEE-802.11b-Standards und IEEE-802.15-Standards unterstützt;
eine Netzserverplattform (108), die an das Breitbandpaketnetz (106) zum Steuern und Verwalten, über das Breitbandpaketnetz, von Operationen des Zugangsports und Dienstanforderungen der damit assoziierten Vielzahl von lokalen drahtlosen Vorrichtungen gekoppelt ist; und
eine Nebenstellenanlage (110), die über das Breitbandtransportnetz an den Medienendgerätadapter (104) des Heim-/Firmen-Breitbandnetzes und an das Breitbandtransportnetz des Dienstanbieters und das Breitbandpaketnetz des Dienstanbieters gekoppelt ist, für die Lieferung von Pakettelefoniedienst.

20. Netzzentrische Dienstverteilungsarchitektur nach Anspruch 19, wobei die Architektur Kommunikation unter der Vielzahl von lokalen drahtlosen Vorrichtungen an einem Unternehmensstandort sowie zwischen der Vielzahl von lokalen drahtlosen Vorrichtungen und drahtlosen Vorrichtungen in einer öffentlichen zellularen Umgebung (136) unterstützt.

21. Netzzentrische Dienstverteilungsarchitektur nach Anspruch 19, wobei der Unternehmensstandort eine Wohnung, ein kleines Büro im eigenen Heim, eine Firma oder einen öffentlichen Raum ist.

22. Netzzentrische Dienstverteilungsarchitektur nach Anspruch 21, wobei der Unternehmensstandort eine Firma ist und die Nebenstellenanlage (110) zwischen dem Medienendgerätadapter und dem Breitbandtransportnetz gekoppelt ist.

23. Netzzentrische Dienstverteilungsarchitektur nach Anspruch 22, wobei die Nebenstellenanlage weiter an ein öffentliches Telefonwählnetz (128) für leitungsvermittelte Telekommunikationsdienste gekoppelt ist.

24. Netzzentrische Dienstverteilungsarchitektur nach Anspruch 20, wobei das lokale Heim-/Firmen-Breitbandnetz an das Breitbandtransportnetz gekoppelt ist und das Breitbandtransportnetz ein HFC-Kabelsystem, ein allgemeines digitales Teilnehmerleitungssystem, ein festes drahtloses System oder ein faseroptisches System umfasst.

25. Netzzentrische Dienstverteilungsarchitektur nach Anspruch 19, wobei der mindestens eine Zugangsport eine miniaturisierte Funkbasisstation zum Einrichten von analogen und digitalen Kommunikationskanälen ist, um zwischen drahtlosen und Pakettelefonieprotokollen umzusetzen.

26. Netzzentrische Dienstverteilungsarchitektur nach Anspruch 19, wobei der mindestens eine Zugangsport, der mit dem Medienendgerätadapter verbunden ist, eine Ethernet-Schnittstelle ist.

27. Netzzentrische Dienstverteilungsarchitektur nach Anspruch 19, wobei der mindestens eine Zugangsport und der Medienendgerätadapter in eine einzelne Einheit integriert sind, um Funktionen des Zugangsports und des Medienendgerätadapters bereitzustellen.

28. Netzzentrische Dienstverteilungsarchitektur nach Anspruch 27, wobei der Medienendgerätadapter mit entweder einem Kabelmodem oder einem Modem für eine allgemeine digitale Teilnehmerleitung integriert ist, um eine einzelne Einheit zu bilden, wobei die einzelne Einheit ein Multimediasignal digital codiert, um ein codiertes Signal zu bilden, das codierte Signal in Internetprotokollpakete verkapselt und die Internetprotokollpakete unter Verwendung des integrierten Kabelmodems oder Modems für eine allgemeine digitale Teilnehmerleitung über das Breitbandtransportnetz an das Breitbandpaketnetz liefert.

29. Netzzentrische Dienstverteilungsarchitektur nach Anspruch 28, wobei der Medienendgerätadapter einen Verbindungszustand für jede aktive Telefonleitung hält und an der Rufsignalisierung und Implementierung von Telefonie Funktionen teilnimmt.

30. Netzzentrische Dienstverteilungsarchitektur nach Anspruch 19, wobei die Vielzahl von lokalen drahtlosen Vorrichtungen Heimgewerbevorrichtungen, Computer-Telefonie-Ressourcen und Computer-Telefonie-Geräte umfasst.

## Revendications

1. Procédé pour la fourniture d'une distribution de service centrée réseau à une pluralité de dispositifs sans fil locaux (118) à un site d'entreprise, le procédé comprenant les étapes de:
fourniture d'un service d'accès sans fil dans un réseau local résidentiel/d'entreprise à large bande au site d'entreprise grâce à l'utilisation d'un réseau de paquets à large bande (106) qui facilite des services de télécommunication par paquets de bout en bout et d'un réseau de transport à large bande (120) qui est couplé entre le réseau de paquets à large bande et le site d'entreprise, le réseau local de paquets à large bande résidentiel/d'entreprise supportant une communication entre la pluralité de dispositifs sans fil locaux, de même que supportant une communication entre ladite pluralité de dispositifs sans fil locaux et le réseau de paquets à large bande (106);
fourniture d'un adaptateur de terminal média (104) couplé à au moins un port d'accès (102) pour recevoir et envoyer des signaux sans fil à une pluralité de dispositifs RBN sans fil selon des fonctions de terminaison d'appel et de service, l'adaptateur de terminal média fournissant des fonctions d'accès pour connecter ledit réseau de paquets à large bande (106) au réseau résidentiel/d'entreprise local à large bande via le réseau de transport à large bande, l'adaptateur de terminal média (104) supportant un inter-fonctionnement de téléphonie parmi les normes TIA/EIA-136, les données améliorées pour les normes Global Evolution/GPRS, les normes IEEE 802.11b et les normes IEEE 802.15;
commande et administration, via le réseau de paquets à large bande (106), des opérations du port d'accès (102) et des demandes de service de la pluralité de dispositifs sans fil locaux associés à celles-ci via une plate-forme de service de réseau (108) couplée au réseau de paquets à large bande (106); et
fourniture d'un service de téléphonie par paquets via un auto-commutateur privé (110) en communication avec l'adaptateur de terminal média (104) du réseau à large bande résidentiel/d'entreprise et via le réseau de transport à large bande du fournisseur de service et le réseau de paquets à large bande du fournisseur de service via le réseau de transport à large bande et l'adaptateur de terminal de média (104).

2. Procédé selon la revendication 1, dans lequel la communication entre un abonné distant et le site d'entreprise de l'abonné est facilitée par des fonctions d'accès réalisées par le réseau résidentiel/d'entreprise local à large bande;

3. Procédé selon la revendication 1, dans lequel le port d'accès (102) comprend une station de base radio miniaturisée pour établir des canaux de communication analogiques et numériques avec ladite pluralité de dispositifs sans fil locaux.

4. Procédé selon la revendication 1, dans lequel la connexion entre ledit port d'accès (102) et ledit adaptateur de terminal de média (104) est une interface Ethernet.

5. Procédé selon la revendication 1, dans lequel la pluralité de dispositifs sans fil locaux comprend n'importe quels dispositifs et ressources domestiques, des dispositifs et ressources informatiques et des appareils capables de communiquer avec ledit port d'accès.

6. Procédé selon la revendication 1, dans lequel ledit port d'accès (102) communique avec ladite pluralité de dispositifs sans fil locaux via une interface d'air normalisée utilisée pour des communications analogiques, numériques, de circuit, et par paquets aux dispositifs sans fil à bande étroite et/ou des ressources et appareils de téléphonie informatiques.

7. Procédé selon la revendication 1, comprenant en outre l'étape d'envoi d'instructions et d'informations à partir d'un dispositif en communication avec ledit réseau de paquets à large bande via ledit réseau de transport à large bande audit adaptateur de terminal de média (104) couplé audit port d'accès à ladite pluralité de dispositifs sans fil locaux.

8. Procédé selon la revendication 7, comprenant en outre l'étape de distribution d'instructions et d'informations comprenant des caractéristiques d'appel et des instructions de fonctionnement, d'administration et de maintenance s'y rapportant via une liaison de communication entre ledit port d'accès (102) et ladite pluralité de dispositifs sans fil locaux (118).

9. Procédé selon la revendication 8, comprenant en outre l'étape dudit dispositif en communication avec ledit réseau de paquets à large bande (106) recevant des informations de ladite pluralité de dispositifs sans fil locaux via ladite liaison de communication entre ladite pluralité de dispositifs sans fil locaux, et ledit port d'accès (102) via ladite liaison de communication entre ledit port d'accès (102) et ledit adaptateur de terminal de média (104), via ledit réseau de transport à large bande, via ledit réseau de paquets à large bande.

10. Procédé selon la revendication 1 ou la revendication 2, dans lequel lesdites fonctions d'accès sont fournies par une unité unique comprenant l'adaptateur de terminal de média (104) intégré au port d'accès (102).

11. Procédé selon la revendication 10, dans lequel ledit port d'accès (102) comprend une station de base radio miniaturisée pour établir des canaux de communication analogiques et numériques avec ladite pluralité de dispositifs sans fil locaux.

12. Procédé selon la revendication 10, dans lequel ladite pluralité de dispositifs sans fil locaux comprend n'importe quels dispositifs et ressources domestiques, dispositifs et ressources informatiques et appareils capables de communiquer avec ledit port d'accès (102).

13. Procédé selon la revendication 10, dans lequel ledit port d'accès (102) communique avec ladite pluralité de dispositifs sans fil locaux via une interface d'air normalisée utilisée pour des communications analogiques, numériques, de circuit, et par paquets aux dispositifs sans fil à bande étroite ou à large bande, et/ou des ressources et des appareils de téléphonie informatique.

14. Procédé selon la revendication 1 ou 2, dans lequel lesdites fonctions de terminaison d'appel et de service sont fournies par un port d'accès envoyant et recevant des signaux sans fil à ladite pluralité de dispositifs sans fil locaux.

15. Procédé selon la revendication 1 ou 2 et comprenant le couplage du réseau résidentiel/d'entreprise local à large bande audit réseau de transport à large bande en utilisant un système de câble coaxial à fibre hybride.

16. Procédé selon la revendication 1 ou 2 et comprenant le couplage du réseau résidentiel/d'entreprise local à large bande audit réseau de transport à large bande en utilisant une ligne d'abonné numérique générique.

17. Procédé selon la revendication 1 ou 2, dans lequel le réseau résidentiel/d'entreprise local à large bande est soit un réseau résidentiel à un site d'entreprise résidentielle soit un réseau d'entreprise à un site d'entreprise commerciale.

18. Procédé selon la revendication 17, dans lequel ledit réseau d'entreprise est un réseau public.

19. Architecture de distribution de service centrée réseau qui facilite des services de télécommunication par paquets de bout en bout comprenant:
une pluralité de dispositifs sans fil locaux (118) à un site d'entreprise;
un réseau de paquets à large bande (106) pour faciliter des services de télécommunication de paquets de bout en bout; et
un réseau de transport à large bande (120) couplé entre le réseau de paquets à large bande et le site d'entreprise;
dans lequel l'architecture de distribution de service centrée réseau comprend en outre:
un réseau résidentiel/d'entreprise local à large bande pour faciliter la communication parmi la pluralité de dispositifs sans fil locaux, ainsi que la communication entre ladite pluralité de dispositifs sans fil locaux et le réseau de paquets à large bande via le réseau de transport à large bande, le réseau résidentiel/d'entreprise local à large bande comprenant:
un adaptateur de terminal média (104) couplé à au moins un port d'accès (102) et au réseau de transport à large bande (120), l'adaptateur de terminal média (104) fournissant des fonctions d'accès pour connecter le réseau résidentiel/d'entreprise local et à large bande au réseau de paquets à large bande via le réseau de transport à large bande, le au moins un port d'accès (102) étant disposé pour recevoir des signaux aériens et les envoyer à la pluralité de dispositifs sans fil locaux, l'adaptateur de terminal média (104) supportant l'inter-fonctionnement de téléphonie entre les normes TIA/EIA-136, les normes Enhanced Data for Global Evolution/GPRS, les normes IEEE 802.11b et les normes IEEE 802.15;
une plate-forme de serveur de réseau (108), couplée au réseau de paquets à large bande (106) pour commander et administrer, via le réseau de paquets à large bande, des opérations du port d'accès et des demandes de service de la pluralité de dispositifs sans fil locaux associées à celle-ci; et
un auto-commutateur privé (110) couplé à l'adaptateur de terminal de média (104) du réseau résidentiel/d'entreprise à large bande et au réseau de transport à large bande du fournisseur de service et au réseau de paquets à large bande du fournisseur de service via le réseau de transport à large bande pour la fourniture de service de téléphonie par paquets.

20. Architecture de distribution de service centrée réseau selon la revendication 19, dans laquelle ladite architecture supporte une communication parmi la pluralité de dispositifs sans fil locaux à un site d'entreprise, ainsi qu'entre la pluralité de dispositifs sans fil locaux et de dispositifs sans fil dans un environnement cellulaire public (136).

21. Architecture de distribution de service centrée réseau selon la revendication 19, dans laquelle le site d'entreprise est une résidence, une petite entreprise à domicile, ou un environnement commercial ou d'usage public.

22. Architecture de distribution de service centrée réseau selon la revendication 21, dans laquelle le site d'entreprise est une firme, et l'auto-commutateur privé (110) est couplé entre l'adaptateur de terminal de média et le réseau de transport à large bande.

23. Architecture de distribution de service centrée réseau de la revendication 22, dans laquelle l'auto-commutateur privé est en outre couplé à un réseau téléphonique public commuté (128) pour des services de télécommunication commutés par circuit.

24. Architecture de distribution de service centrée réseau selon la revendication 20, dans laquelle le réseau résidentiel/d'entreprise local à large bande est couplé au réseau de transport à large bande et le réseau de transport à large bande comprend un système de câble coaxial à fibre hybride, un système de ligne d'abonné numérique générique, un système sans fil fixe, ou un système de fibre optique.

25. Architecture de distribution de service centrée réseau selon la revendication 19, dans laquelle le au moins un port d'accès est une station de base radio miniaturisée pour établir des canaux de communication analogiques et numériques afin d'inter-fonctionner entre des protocoles de téléphonie sans fil et par paquets.

26. Architecture de distribution de service centrée réseau selon la revendication 19, dans laquelle au moins un port d'accès raccordé à l'adaptateur de terminal de média est une interface Ethernet.

27. Architecture de distribution de service centrée réseau selon la revendication 19, dans laquelle le au moins un port d'accès et l'adaptateur de terminal de média sont intégrés dans une unité unique pour fournir des fonctions du port d'accès et de l'adaptateur de terminal de média.

28. Architecture de distribution de service centrée réseau selon la revendication 27, dans laquelle l'adaptateur de terminal de média est intégré soit à un câble soit à un modem de ligne d'abonné numérique générique pour former une unité unique, dans laquelle l'unité unique code numériquement un signal multimédia pour former un signal codé, encapsule le signal codé dans des paquets de protocole IP, et délivre les paquets de protocole IP au réseau de paquets à large bande via le réseau de transport à large bande, en utilisant le câble intégré ou le modem de ligne d'abonné numérique générique.

29. Architecture de distribution de service centrée réseau selon la revendication 28, dans laquelle l'adaptateur de terminal de média maintient un état d'appel pour chaque ligne de téléphone active et participe à la signalisation d'appel et à l'implémentation des fonctionnalités téléphoniques.

30. Architecture de distribution de service centrée réseau selon la revendication 19, dans laquelle la pluralité de dispositifs sans fil locaux comprend des dispositifs pour le travail à domicile, des ressources de téléphonie informatique et des appareils de téléphonie informatique.
